# EUROPEAN PATENT APPLICATION

(11) **EP 4 379 898 A1**
(43) Date of publication of application: **05.06.2024**
(21) Application number: 22849487.8
(22) Date of filing: 26.07.2022
(51) Int. Cl.: H01M 10/18, H01M 4/14, H01M 4/68, H01M 10/04

(54) **BIPOLAR STORAGE BATTERY AND MANUFACTURING METHOD FOR BIPOLAR STORAGE BATTERY**

(30) Priority: 27.07.2021 JP 2021122682
(71) Applicant: The Furukawa Battery Co., Ltd., Yokohama-shi, Kanagawa-ken 240-0006 (JP); FURUKAWA ELECTRIC CO., LTD., Tokyo 100-8322 (JP)
(72) Inventor: YAMADA, Keizo, Jyoban-shimofunao-machi, Iwaki-shi, Fukushima 972- 8501 (JP); NISHIKUBO, Hideo, Tokyo 100-8322 (JP); OGIWARA, Yoshiaki, Tokyo 100-8322 (JP); KANEKO, Hiroshi, Tokyo 100-8322 (JP); TANAKA, Hiroki, Tokyo 100-8322 (JP)
(74) Representative: Grünecker Patent- und Rechtsanwälte PartG mbB
(86) International application number: PCT/JP2022/028775
(87) International publication number: WO 2023/008426

(57) **Abstract**

Even if growth occurs in a positive electrode due to corrosion by an electrolyte solution, the electrolyte solution is prevented from infiltrating into a through hole, and even if the electrolyte solution infiltrates into the through hole, the electrolyte solution is prevented from reaching a negative electrode side as much as possible to greatly suppress the occurrence of a liquid junction, so that battery performance is less likely to deteriorate, and the life is prolonged. There are provided: a cell member (110) including a positive electrode (111), a negative electrode (112), and an electrolyte layer (113) interposed between the positive electrode (111) and the negative electrode (112), the cell member being stacked and disposed at an interval; a space forming member (120) including a substrate (121) and a frame body (122); a through hole (121a) formed to penetrate between a positive electrode side and a negative electrode side in the space forming member (120); and a conductor (170) inserted into the through hole (121a) to electrically connect the positive electrode side and the negative electrode side, in which a liquid junction prevention member (180) is provided in at least one of a vicinity of an opening on the positive electrode side and a vicinity of an opening on the negative electrode side of the through hole (121a).

## Description

### Technical Field

Embodiments described herein relate to a bipolar storage battery and a manufacturing method for a bipolar storage battery.

### Background Art

These days, the number of power generation facilities utilizing natural energy such as sunlight and wind power is increasing. In such power generation facilities, the amount of power generation cannot be controlled, and thus, storage batteries are used to level the power load. That is, when the amount of power generation is larger than the amount of consumption, the difference is charged into storage batteries, and when the amount of power generation is smaller than the amount of consumption, the difference is discharged from the storage batteries. As the storage battery described above, a lead-acid storage battery is frequently used from the viewpoint of economic efficiency, safety, etc. As such a conventional lead-acid storage battery, for example, one described in PTL 1 below is known.

In the lead-acid storage battery described in PTL 1, a substrate (bipolar plate) made of resin is attached inside a frame (rim) made of resin having a picture frame shape. A positive lead layer and a negative lead layer are provided on one surface and the other surface of the substrate. A positive active material layer is adjacent to the positive lead layer. A negative active material layer is adjacent to the negative lead layer. Furthermore, a glass mat (electrolyte layer) containing an electrolyte solution is disposed inside a spacer made of resin having a picture frame shape. Then, a plurality of the frames and a plurality of the spacers are alternately stacked and assembled.

Moreover, the positive lead layer and the negative lead layer are directly joined in a plurality of perforations formed in the substrate. That is, the lead-acid storage battery described in PTL 1 is a bipolar lead-acid storage battery in which a plurality of substrates having perforations (communication holes) for communicating one surface side and another surface side and cell members is alternately stacked.

The cell member includes a positive electrode in which the positive active material layer is provided on the positive lead layer, a negative electrode in which the negative active material layer is provided on the negative lead layer, and the electrolyte layer interposed between the positive electrode and the negative electrode, the positive lead layer of one cell member and the negative lead layer of another cell member enter the inside of the perforations of the substrate and joined, and the cell members are connected in series. Here, when the positive lead layer and the negative lead layer are joined, for example, resistance welding is used.

### Citation List

### Patent Literature

PTL 1: JP 6124894 B2

### Summary of Invention

### Technical Problem

The positive lead layer or the negative lead layer provided on the substrate described above is formed in a thin film shape (lead foil). As a method of providing the positive electrode lead foil and the negative electrode lead foil on the substrate, for example, it is conceivable that an adhesive is applied onto the substrate, the positive electrode lead foil and the negative electrode lead foil are placed thereon, and the positive electrode lead foil and the negative electrode lead foil are bonded to the substrate via the adhesive. Here, as the adhesive, for example, an epoxy resin is used.

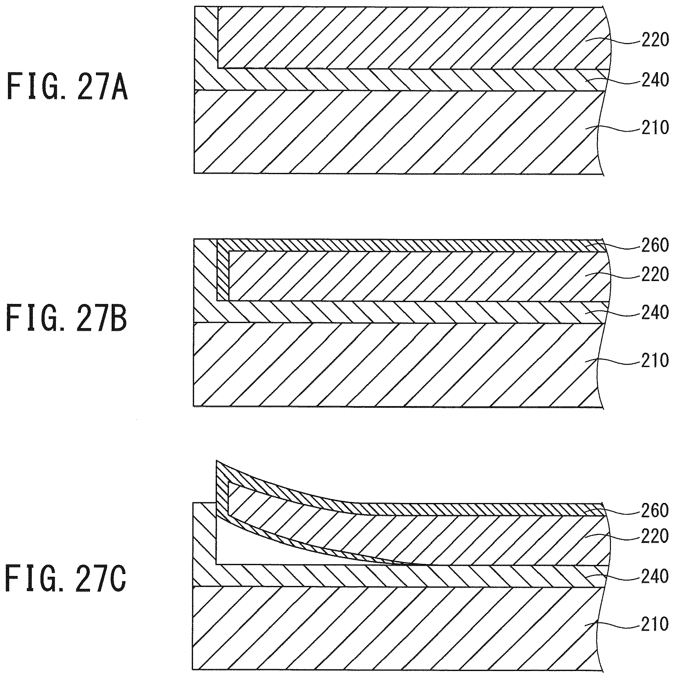

FIGS. 27A to C illustrate a state in which a positive electrode lead foil and a negative electrode lead foil are bonded to a substrate using an adhesive as described above. Note that lead foils to be bonded to the substrate using the adhesive include a positive electrode lead foil and a negative electrode lead foil, and in FIGS. 27A to C, the positive electrode lead foil is described as an example. That is, as illustrated in FIG. 27A, the positive electrode of the bipolar electrode is configured such that a positive electrode lead foil 220 is disposed on one surface of a resin substrate 210 with an adhesive layer 240 interposed therebetween, and a positive active material layer (not illustrated) is disposed on the positive electrode lead foil 220.

In the bipolar lead-acid storage battery as described above, the positive electrode lead foil 220 may be corroded by sulfuric acid contained in the electrolyte solution to generate a coating film 260 of a corrosion product (lead oxide) on a surface of the positive electrode lead foil 220 (see FIG. 27B). Besides, there has been a risk that an elongation (growth) occurs in the positive electrode lead foil 220 due to the development of the coating film 260 of the corrosion product.

Moreover, due to this growth, the positive electrode lead foil 220 and the adhesive layer 240 are peeled off, an electrolyte solution infiltrates into an interface between the positive electrode lead foil 220 and the adhesive layer 240, and corrosion of the positive electrode lead foil 220 due to sulfuric acid may further proceed (see FIG. 27C). As a result, when corrosion reaches, for example, a back surface of the positive electrode lead foil 220 (a surface facing the substrate 210), the positive electrode lead foil 220 may be peeled off, and the performance of the battery may be deteriorated.

Moreover, when the electrolyte solution reaches the negative electrode side from the positive electrode side via the above-described perforations (communication holes) for communicating the one surface side and the other surface side, which are provided to achieve conduction between the positive electrode and the negative electrode, a so-called liquid junction occurs, which causes a decrease in voltage and causes a decrease in battery performance.

Furthermore, for example, in joining the positive electrode lead layer and the negative electrode lead layer, resistance welding is used as described above. However, when the positive lead layer and the negative lead layer are not appropriately welded due to various factors, there is a possibility that joining failure occurs.

When the electrolyte solution infiltrates between the substrate and the positive electrode lead layer due to the joining failure, the electrolyte solution infiltrates between the substrate and the negative electrode lead layer via, for example, a perforation (communication hole) to cause liquid junction, which may cause performance deterioration as described above.

An object of the present invention is to provide a bipolar storage battery and a manufacturing method for a bipolar storage battery, which can avoid infiltration of an electrolyte solution into a through hole even when growth occurs in a positive electrode due to corrosion by sulfuric acid contained in the electrolyte solution and, even when the electrolyte solution infiltrates into the through hole, prevent the electrolyte solution from reaching a negative electrode side as much as possible to greatly suppress occurrence of a liquid junction, thereby making it difficult for battery performance to deteriorate and making it possible to achieve a long life.

### Solution to Problem

A bipolar storage battery according to an aspect of the present invention includes: a cell member including a positive electrode including a positive electrode current collector and a positive active material layer, a negative electrode including a negative electrode current collector and a negative active material layer, and an electrolyte layer interposed between the positive electrode and the negative electrode, the cell member being stacked and disposed at an interval; a space forming member including a substrate covering at least one of a positive electrode side and a negative electrode side of the cell member and a frame body surrounding a side surface of the cell member, the space forming member forming a plurality of spaces individually accommodating a plurality of the cell members; a through hole formed to penetrate between the positive electrode side and the negative electrode side in the space forming member; and a conductor inserted into the through hole to electrically connect the positive electrode side and the negative electrode side, in which a liquid junction prevention member is provided in at least one of a vicinity of an opening on the positive electrode side and a vicinity of an opening on the negative electrode side of the through hole.

A manufacturing method for a bipolar storage battery according to an aspect of the present invention includes: inserting a conductor into a through hole provided to penetrate one surface and another surface of a substrate of a space forming member; disposing a positive electrode current collector on the one surface; disposing a negative electrode current collector on the other surface; disposing a liquid junction prevention member to cover at least one of the through holes from above the positive electrode current collector and the negative electrode current collector; performing welding to sandwich between the disposed liquid junction prevention member on a side of the positive electrode current collector and the disposed liquid junction prevention member on a side of the negative electrode current collector, or in a case where the liquid junction prevention member is disposed on either the side of the positive electrode current collector or the negative electrode current collector, to sandwich between the liquid junction prevention member and the negative electrode current collector or between the liquid junction prevention member and the positive electrode current collector, and joining the liquid junction prevention member, the positive electrode current collector, the negative electrode current collector, and the conductor; disposing a positive active material layer to be in contact with the positive electrode current collector; and disposing a negative active material layer to be in contact with the negative electrode current collector.

### Advantageous Effects of Invention

According to the present invention, a bipolar storage battery according to an aspect of the present invention includes: a cell member including a positive electrode including a positive electrode current collector and a positive active material layer, a negative electrode including a negative electrode current collector and a negative active material layer, and an electrolyte layer interposed between the positive electrode and the negative electrode, the cell member being stacked and disposed at an interval; a space forming member including a substrate covering at least one of a positive electrode side and a negative electrode side of the cell member and a frame body surrounding a side surface of the cell member, the space forming member forming a plurality of spaces individually accommodating a plurality of the cell members; a through hole formed to penetrate between the positive electrode side and the negative electrode side in the space forming member; and a conductor inserted into the through hole to electrically connect the positive electrode side and the negative electrode side, in which a liquid junction prevention member is provided in at least one of a vicinity of an opening on the positive electrode side and a vicinity of an opening on the negative electrode side of the through hole. By adopting such a configuration, it is possible to provide a bipolar storage battery and a manufacturing method for a bipolar storage battery, which can avoid infiltration of an electrolyte solution into the through hole even when growth occurs in the positive electrode due to corrosion by sulfuric acid contained in the electrolyte solution, and even when the electrolyte solution infiltrates into the through hole, prevent the electrolyte solution from reaching the negative electrode side as much as possible to greatly suppress occurrence of a liquid junction, thereby making it difficult for battery performance to deteriorate and making it possible to achieve a long life.

### Brief Description of Drawings

FIG. 1 is a schematic cross-sectional view illustrating an outline of a structure of a bipolar storage battery according to an embodiment of the present invention;
FIG. 2 is an enlarged cross-sectional view illustrating a structure of a main part of the bipolar storage battery according to a welding step in the embodiment of the present invention;
FIG. 3 is an enlarged cross-sectional view illustrating a state in which a conductor, a liquid junction prevention member, a positive electrode, and a negative electrode are provided around a substrate in the bipolar storage battery according to a first embodiment of the present invention;
FIG. 4 is a flowchart illustrating a flow of manufacturing the bipolar storage battery according to the first embodiment of the present invention;
FIG. 5 is a flowchart illustrating a flow of manufacturing the bipolar storage battery according to the first embodiment of the present invention;
FIG. 6 is an enlarged cross-sectional view illustrating a state in which a conductor, a liquid junction prevention member, a positive electrode, and a negative electrode are provided around a substrate in a bipolar storage battery according to a second embodiment of the present invention;
FIG. 7 is an enlarged cross-sectional view illustrating a modification of the bipolar storage battery in the second embodiment of the present invention;
FIG. 8 is an enlarged cross-sectional view illustrating a state in which a conductor, a liquid junction prevention member, a positive electrode, and a negative electrode are provided around a substrate in a bipolar storage battery according to a third embodiment of the present invention;
FIG. 9 is a flowchart illustrating a flow of manufacturing a bipolar storage battery according to the third embodiment of the present invention;
FIG. 10 is an enlarged cross-sectional view illustrating a state in which a conductor, a positive electrode, and a negative electrode are provided around a substrate in the bipolar storage battery according to a fourth embodiment of the present invention;
FIG. 11 is a flowchart illustrating a flow of manufacturing the bipolar storage battery according to the fourth embodiment of the present invention;
FIG. 12 is an enlarged cross-sectional view illustrating a state in which a conductor, a liquid junction prevention member, a positive electrode, and a negative electrode are provided around a substrate in the bipolar storage battery according to a fifth embodiment of the present invention;
FIG. 13 is a flowchart illustrating a flow of manufacturing the bipolar storage battery according to the fifth embodiment of the present invention;
FIG. 14 is a flowchart illustrating a flow of manufacturing the bipolar storage battery according to the fifth embodiment of the present invention;
FIG. 15 is a perspective view illustrating an example in which a liquid junction prevention member in the embodiment of the present invention is provided in at least one of the vicinity of an opening on a positive electrode side and the vicinity of an opening on a negative electrode side of a through hole according to the fifth embodiment of the present invention;
FIG. 16 is a cross-sectional view of a bipolar plate illustrated in FIG. 15 taken along line A-A;
FIG. 17 is a perspective view illustrating an example in which a liquid junction prevention member is provided in the vicinity of an opening of a through hole in a bipolar storage battery according to a sixth embodiment of the present invention;
FIG. 18 is a perspective view illustrating an example in which a liquid junction prevention member is provided in the vicinity of an opening of a through hole in a bipolar storage battery according to a seventh embodiment of the present invention;
FIG. 19 is a cross-sectional view of a bipolar plate illustrated in FIG. 18 taken along line B-B;
FIG. 20 is a perspective view illustrating an example in which a liquid junction prevention member is provided in the vicinity of an opening of a through hole in a bipolar storage battery according to an eighth embodiment of the present invention;
FIG. 21 is a cross-sectional view of a bipolar plate illustrated in FIG. 20 taken along line C-C;
FIG. 22 is a perspective view illustrating an example in which a liquid junction prevention member is provided in the vicinity of an opening of a through hole in a bipolar storage battery according to a ninth embodiment of the present invention;
FIG. 23 is a cross-sectional view of a bipolar plate illustrated in FIG. 22 taken along line D-D;
FIG. 24 is a sectional view of a press mechanism in a bipolar storage battery according to a tenth embodiment of the present invention, in which a liquid junction prevention member is provided in the vicinity of an opening of a through hole, and the press mechanism is provided so as to penetrate a cell member;
FIG. 25 is a perspective view illustrating an example in which a liquid junction prevention member is provided in the vicinity of an opening of a through hole in a bipolar storage battery according to an eleventh embodiment of the present invention;
FIG. 26 is a cross-sectional view taken along line E-E of a bipolar plate illustrated in FIG. 25; and
FIGS. 27A to C are views illustrating a state in which growth occurs in a positive electrode lead foil due to corrosion by sulfuric acid contained in an electrolyte solution, and as a result, the electrolyte solution infiltrates into an interface between the positive electrode lead foil and an adhesive layer in a conventional bipolar lead-acid storage battery.

### Description of Embodiments

Hereinafter, an embodiment of the present invention will be described in detail with reference to the drawings. Note that the embodiments described below illustrate an example of the present invention. Furthermore, various changes or improvements can be added to the embodiments, and a mode to which such changes or improvements are added can also be included in the present invention. These embodiments and modifications thereof are included in the scope and gist of the invention, and are included in the scope of the invention described in the claims and its equivalents. Note that, hereinafter, explanation will be given using a lead-acid storage battery as an example among various storage batteries.

### (First embodiment)

### [Overall configuration]

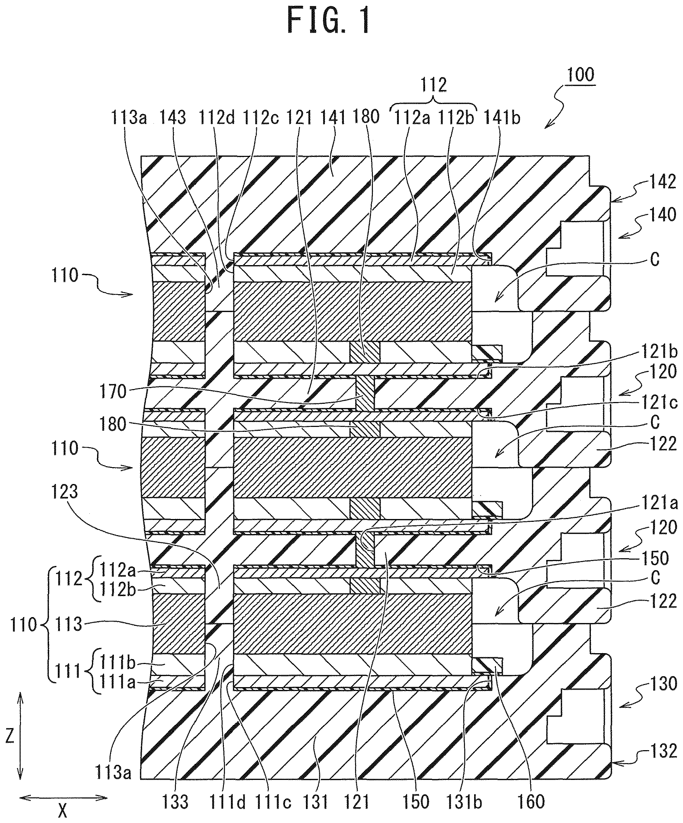

First, an overall configuration of a bipolar lead-acid storage battery according to an embodiment of the present invention will be described with reference to FIG. 1. FIG. 1 is a schematic cross-sectional view illustrating an outline of a structure of a bipolar lead-acid storage battery 100 according to an embodiment of the present invention.

As illustrated in FIG. 1, the bipolar lead-acid storage battery 100 of the first embodiment of the present invention includes a plurality of cell members 110, a plurality of bipolar plates (space forming members) 120, a first end plate (space forming member) 130, a second end plate (space forming member) 140, and a cover plate 160.

Here, although FIG. 1 illustrates the bipolar lead-acid storage battery 100 in which three cell members 110 are stacked, the number of cell members 110 is determined by battery design. Furthermore, the number of bipolar plates 120 is determined according to the number of cell members 110.

Note that, in the following description, as illustrated in FIG. 1, a stacking direction of the cell members 110 is defined as a Z direction (vertical direction in FIG. 1), and directions perpendicular to the Z direction and perpendicular to each other are defined as an X direction and a Y direction.

Each of the cell members 110 includes a positive electrode 111, a negative electrode 112, and a separator (electrolyte layer) 113. The positive electrode 111 includes a positive electrode lead foil 111a which is a positive electrode current collector and a positive active material layer 111b. The negative electrode 112 includes a negative electrode lead foil 112a as a negative electrode current collector and a negative active material layer 112b.

The separator 113 is impregnated with an electrolyte solution. The separator 113 is interposed between the positive electrode 111 and the negative electrode 112. In the cell member 110, the positive electrode lead foil 111a, the positive active material layer 111b, the separator 113, the negative active material layer 112b, and the negative electrode lead foil 112a are stacked in this order.

The dimensions in the X-direction and the Y-direction of the positive electrode lead foil 111a are larger than the dimensions in the X-direction and the Y-direction of the positive active material layer 111b. Similarly, the dimensions in the X-direction and the Y-direction of the negative electrode lead foil 112a are larger than the dimensions in the X-direction and the Y-direction of the negative active material layer 112b. For the dimension in the Z-direction (thickness), the positive electrode lead foil 111a is larger (thicker) than the negative electrode lead foil 112a, and the positive active material layer 111b is larger (thicker) than the negative active material layer 112b.

The plurality of cell members 110 are arranged with spacing in a stacked manner in the Z-direction, and substrates 121 of the bipolar plates 120 are arranged in the portions of spacing. That is, the plurality of cell members 110 are stacked in a state of being sandwiched between the substrates 121 of the bipolar plate 120.

Thus, the plurality of bipolar plates 120, the first end plate 130, and the second end plate 140 are space forming members for forming a plurality of spaces (cells) C individually accommodating the plurality of cell members 110.

That is, the bipolar plate 120 is a space forming member including a substrate 121 covering both the positive electrode side and the negative electrode side of cell members 110 and having a rectangular planar shape and a frame body 122 surrounding side surfaces of the cell members 110 and covering the four end surfaces of the substrate 121.

Moreover, as illustrated in FIG. 1, the bipolar plate 120 further includes a column 123 perpendicularly protruding from both surfaces of the substrate 121. The number of columns 123 protruding from each surface of the substrate 121 may be one or plural.

The substrate 121, the frame body 122, and the column 123 that constitute the bipolar plate 120 are integrally formed of, for example, the thermoplastic resin. Examples of the thermoplastic resin forming the bipolar plate 120 include acrylonitrile-butadienestyrene copolymer (ABS resin) and polypropylene. These thermoplastic resins are excellent in moldability and also excellent in sulfuric acid resistance. Hence, even when the electrolyte solution comes into contact with the bipolar plate 120, decomposition, deterioration, corrosion, and the like hardly occur in the bipolar plate 120.

In the Z direction, a dimension of the frame body 122 is larger than a dimension (thickness) of the substrate 121, and a dimension between protruding end surfaces of the column 123 is the same as the dimension of the frame body 122. Then, the plurality of bipolar plates 120 are stacked with the frame body 122 and the columns 123 in contact with each other, whereby the space C is formed between the substrate 121 and the substrate 121, and the dimensions of the space C in the Z direction are maintained by the columns 123 in contact with each other.

Through holes 111c, 111d, 112c, 112d, and 113a penetrating the column 123 are formed in the positive electrode lead foil 111a, the positive active material layer 111b, the negative electrode lead foil 112a, the negative active material layer 112b, and the separator 113, respectively.

The substrate 121 of the bipolar plate 120 has a plurality of through holes 121a penetrating the plate surface. A first recess 121b is formed on one surface of the substrate 121, and a second recess 121c is formed on the other surface. The depth of the first recess 121b is deeper than the depth of the second recess 121c. The dimensions in the X-direction and the Y-direction of the first recess 121b and the second recess 121c are made to correspond to the dimensions in the X-direction and the Y-direction of the positive electrode lead foil 111a and the negative electrode lead foil 112a.

The substrate 121 of the bipolar plate 120 is placed between adjacent cell members 110 in the Z-direction. The positive electrode lead foil 111a, which is a positive electrode current collector made of lead or a lead alloy, is disposed in the first recess 121b of the substrate 121 of the bipolar plate 120. Furthermore, the negative electrode lead foil 112a, which is a negative electrode current collector made of lead or a lead alloy, is disposed in the second recess 121c of the substrate 121 of the bipolar plate 120.

Specifically, the positive electrode lead foil 111a is joined to the first recess 121b of the substrate 121 via an adhesive 150 provided between the first recess 121b of the substrate 121 and the positive electrode lead foil 111a. Furthermore, the negative electrode lead foil 112a is joined to the second recess 121c of the substrate 121 via the adhesive 150 provided between the second recess 121c of the substrate 121 and the negative electrode lead foil 112a.

The substrate 121 of the bipolar plate 120 is placed between adjacent cell members 110 in the Z-direction. Then, the positive electrode lead foil 111a of the cell member 110 is disposed in the first recess 121b of the substrate 121 of the bipolar plate 120 with the adhesive 150 interposed therebetween.

On an outer edge portion of the positive electrode lead foil 111a, a cover plate 160 for covering the outer edge portion is provided. The cover plate 160 is a thin plate-shaped frame body, and has a rectangular inner shape line and an outer shape. An inner edge portion of the cover plate 160 overlaps an outer edge portion of the positive electrode lead foil 111a, and an outer edge portion of the cover plate 160 overlaps a peripheral edge portion of the first recess 121b on one surface of the substrate 121.

That is, the rectangle forming the inner shape line of the cover plate 160 is smaller than the rectangle forming the outer shape line of the positive active material layer 111b, and the rectangle forming the outer shape line of the cover plate 160 is larger than the rectangle forming the opening surface of the first recess 121b.

The adhesive 150 goes around from the end surface of the positive electrode lead foil 111a to the outer edge on the opening side of the first recess 121b, and is disposed between the inner edge of the cover plate 160 and the outer edge of the positive electrode lead foil 111a. The adhesive 150 is also disposed between the outer edge of the cover plate 160 and one surface of the substrate 121.

That is, the cover plate 160 is fixed by the adhesive 150 over the peripheral edge of the first recess 121b on one surface of the substrate 121 and the outer edge of the positive electrode lead foil 111a. Accordingly, the outer edge portion of the positive electrode lead foil 111a is also covered with the cover plate 160 at the boundary portion with the peripheral edge portion of the first recess 121b. Furthermore, the negative electrode lead foil 112a of the cell member 110 is disposed in the second recess 121c of the substrate 121 of the bipolar plate 120 via the adhesive 150.

Note that, although not illustrated in FIG. 1, the outer edge portion of the negative electrode lead foil 112a may also be covered with a cover plate similar to the cover plate 160 covering the outer edge portion of the positive electrode lead foil 111a. Furthermore, the cover plate has been described as an example of a thin plate-shaped frame body, but for example, a tape-shaped object or the like may be used as long as the cover plate has electrolyte solution (sulfuric acid resistance) resistance.

A conductor 170 is disposed in the through hole 121a of the substrate 121 of the bipolar plate 120. Furthermore, both end surfaces of the conductor 170 are in contact with and coupled to the positive electrode lead foil 111a and the negative electrode lead foil 112a. That is, the positive electrode lead foil 111a and the negative electrode lead foil 112a are electrically connected by the conductor 170. As a result, all of the plurality of cell members 110 are electrically connected in series. Note that, in the embodiment described below, there may be a modification of the conductor 170, but if contents are not specific to the modification, the conductor will be appropriately referred to as a "conductor 170".

A liquid junction prevention member 180 is provided in any one of the vicinity of the opening on the positive electrode side and the vicinity of the opening on the negative electrode side of the through hole 121a. As illustrated in FIG. 1, the liquid junction prevention member 180 is disposed on the positive electrode lead foil 111a and the negative electrode lead foil 112a so as to cover the opening of the through hole 121a.

As described above, the liquid junction prevention member 180 is provided in any one of the vicinity of the opening on the positive electrode side and the vicinity of the opening on the negative electrode side of the through hole 121a, and the "vicinity" includes not only a case where the liquid junction prevention member spreads in the x direction and the y direction around the through hole 121a but also a case where the liquid junction prevention member is disposed in the vicinity of the through hole 121a in the z direction.

Furthermore, the liquid junction prevention member 180 is formed of, for example, lead or a lead alloy, lead-tin eutectic solder, or ceramic dispersed metal. Among these, the ceramic-dispersed metal is less likely to cause corrosion or the like even when it comes into contact with sulfuric acid contained in the electrolyte solution. Furthermore, the shape may be, for example, a circle, an ellipse, or a polygon including a rectangle in a plan view. Note that, since FIG. 1 is a schematic cross-sectional view of the bipolar lead-acid storage battery 100, the liquid junction prevention member 180 is illustrated in a rectangular shape.

As described above, the liquid junction prevention member 180 is formed of lead or the like, but as a method of manufacturing the liquid junction prevention member, for example, casting can be adopted. Furthermore, the casting method may be, for example, any method such as a book molding method or electroforming (electroplating).

Moreover, it can be manufactured not by casting but by forging. As a method of forging, various methods such as a method of folding into multiple layers and forging, placing in a mold, and die forging can be adopted. The liquid junction prevention member 180 can also be manufactured integrally with the positive electrode lead foil 111a or the negative electrode lead foil 112a by casting or forging.

Furthermore, heat treatment or the like may be performed after forging. By performing the heat treatment, it is possible to prevent the electrolyte solution from entering the gap by filling the gap or the like that can appear in the liquid junction prevention member 180.

The liquid junction prevention member 180 is disposed at such a position, and is joined to the conductor 170 via the positive electrode lead foil 111a and the negative electrode lead foil 112a. Therefore, by being joined in this way, the through hole 121a is in a sealed state, and it is possible to prevent a so-called liquid junction in which the electrolyte solution is transmitted from the positive electrode side to the negative electrode side via the through hole 121a. Note that, in the embodiment described below, there may be a modification of the liquid junction prevention member 180, but if the content is not specific to the modification, the liquid junction prevention member is appropriately referred to as a "liquid junction prevention member 180".

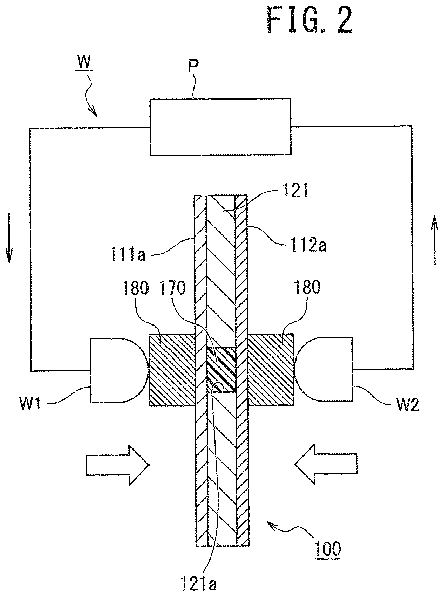

Here, the liquid junction prevention member 180 is joined to the positive electrode lead foil 111a, the negative electrode lead foil 112a, and the conductor 170 as follows. FIG. 2 is an enlarged cross-sectional view illustrating a structure of a main part of the bipolar lead-acid storage battery 100 according to the welding step in the embodiment of the present invention. Moreover, FIG. 2 illustrates a part of a welding machine necessary for welding.

As illustrated in FIG. 2, a conductor 170 is inserted into a through hole 121a provided in the substrate 121. Then, the positive electrode lead foil 111a is disposed so as to cover the through hole 121a and the conductor 170.

Specifically, an adhesive 150 (not illustrated in FIG. 2) is provided on one surface of the substrate 121, a positive electrode lead foil 111a is disposed thereon, and the adhesive 150 and the positive electrode lead foil 111a are bonded. Note that the adhesive 150 is not provided in the vicinity of the through hole 121a.

Furthermore, similarly, the adhesive 150 (not illustrated in FIG. 2) is provided on the other surface of the substrate 121, and the negative electrode lead foil 112a is disposed thereon to bond the adhesive 150 and the negative electrode lead foil 112a. Note that in FIG. 2, illustration of the positive active material layer 111b and the negative active material layer 112b is omitted.

Moreover, the liquid junction prevention member 180 is disposed so as to cover the through hole 121a and so as to be in contact with the positive electrode lead foil 111a and the negative electrode lead foil 112a from both sides of the positive electrode side and the negative electrode side. In this state, the liquid junction prevention members 180 and 180 on the positive electrode side and the negative electrode side are pressurized and heated toward the conductor 170.

A welding machine W is used for joining the liquid junction prevention members 180 and 180, the positive electrode lead foil 111a, the negative electrode lead foil 112a, and the conductor 170. In the embodiment of the present invention, resistance welding is performed using the welding machine W illustrated in FIG. 2.

The welding machine W includes a power supply P and two electrodes W1 and W2 connected to the power supply P. The current applied from the power supply P to the electrode W1 and the electrode W2 flows from the power supply P to the electrode W1 and from the electrode W2 to the power supply P as indicated by thin arrows in FIG. 2.

At the time of welding, the electrode W1 is in contact with the liquid junction prevention member 180 provided in contact with the positive electrode lead foil 111a, and the electrode W2 is in contact with the liquid junction prevention member 180 provided in contact with the negative electrode lead foil 112a. Then, the respective electrodes move toward the through hole 121a in a direction indicated by a thick arrow in FIG. 2 while applying pressure so as to approach each other.

As described above, since the electrode is in contact with the liquid junction prevention member 180, the liquid junction prevention members 180 on the positive electrode side and the negative electrode side are also deformed so as to be curved with the movement of the electrode, and at this time, the current flows in the direction of the thin arrow illustrated in the welding machine W, so that they are fused to each other.

By welding while applying pressure, a gap between the liquid junction prevention member 180 on the positive electrode side and the liquid junction prevention member 180 on the negative electrode side is greatly reduced, so that liquid junction can be prevented. Moreover, in order to prevent the gap from expanding after welding, it is desirable that the thickness of the liquid junction prevention member 180 is sufficiently thick in order to prevent deformation.

Note that, in the first embodiment of the present invention, joining is performed by resistance welding, but other joining methods may be used, and for example, joining may be performed by ultrasonic welding. Furthermore, a space through which the rivet or the eyelet passes may be provided in the through hole, the positive electrode lead foil, and the negative electrode lead foil, and caulked with the rivet or the eyelet.

After the resistance welding is performed in this manner, the positive active material layer 111b is further disposed in contact with the positive electrode lead foil 111a, the negative active material layer 112b is disposed in contact with the negative electrode lead foil 112a, and then the separator 113 is provided in contact with the positive active material layer 111b and the negative active material layer 112b.

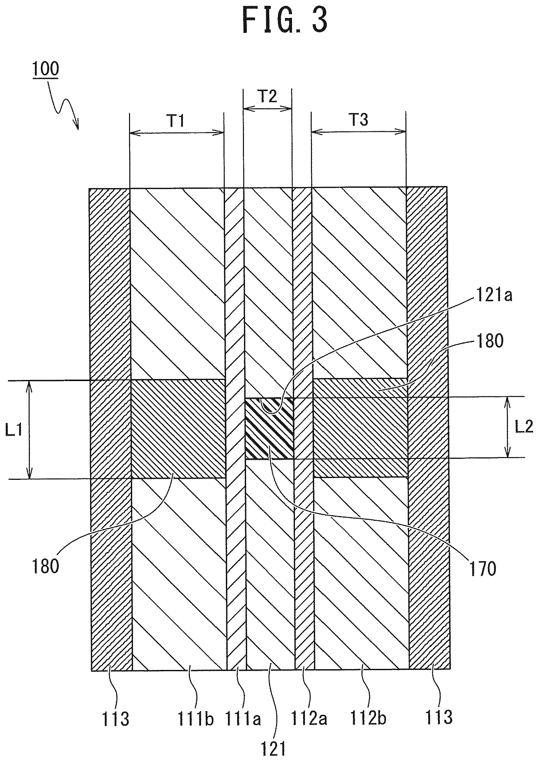

FIG. 3 is an enlarged cross-sectional view illustrating a state in which a conductor 170, liquid junction prevention members 180 and 180, a positive electrode 111, and a negative electrode 112 are provided around a substrate 121 in the bipolar lead-acid storage battery 100 according to the first embodiment of the present invention.

Note that, in the bipolar lead-acid storage battery 100 according to the first embodiment, the thicknesses of the positive active material layer 111b and the negative active material layer 112b are equal to or larger than the thickness of the liquid junction prevention members 180 and 180. However, in FIGS. 1 and 3, the thicknesses of the positive active material layer 111b and the negative active material layer 112b are drawn by exemplifying a case where the thicknesses are equal to the thickness of the liquid junction prevention members 180 and 180.

Here, in terms of dimensions of each part, a thickness (In FIG. 3, the thickness of the liquid junction prevention member 180 provided in contact with the positive electrode lead foil 111a is represented as "T1", and the thickness of the liquid junction prevention member 180 provided in contact with the negative electrode lead foil 112a is represented as "T3".), which is an amount of protrusion of the liquid junction prevention member 180 from the positive electrode lead foil 111a or the negative electrode lead foil 112a, is formed to be larger than a thickness "T2" of the substrate 121.

Since the thicknesses T1 and T3 of the liquid junction prevention members 180 and 180 are larger than the thickness T2 of the substrate 121 as described above, when welding is performed while pressing the liquid junction prevention members 180 and 180 toward the through hole 121a from the positive electrode side and the negative electrode side, a swaging effect is expected in which it is possible to prevent the conductor 170 from biting into the inner periphery of the through hole 121a to form a gap between the conductor 170 and the through hole 121a, and the occurrence of liquid junction can be suppressed.

Furthermore, the thickness "T1" of the liquid junction prevention member 180 provided in contact with the positive electrode lead foil 111a is equal to the thickness "T3" of the liquid junction prevention member 180 provided in contact with the negative electrode lead foil 112a.

That is, as illustrated in FIG. 2 described above, the liquid junction prevention member 180, the positive electrode lead foil 111a, the conductor 170 inserted into the through hole 121a, the negative electrode lead foil 112a, and the liquid junction prevention member 180 are resistance-welded, but since the thickness of the liquid junction prevention member 180 on the positive electrode side is equal to the thickness of the liquid junction prevention member 180 on the negative electrode side, the effect of welding can be equalized between the positive electrode side and the negative electrode side. Furthermore, it is possible to avoid complicated setting of the welding condition caused by the difference in thickness between the liquid junction prevention member 180 on the positive electrode side and the liquid junction prevention member 180 on the negative electrode side.

On the other hand, a width L1 of the liquid junction prevention member 180 is formed to be larger than an opening width L2 of the through hole 121a. This is because if the width of the liquid junction prevention member 180 is smaller than the opening width of the through hole 121a, the electrolyte solution cannot be prevented from reaching the negative electrode side from the positive electrode side through the through hole 121a.

Note that a relationship between the thickness of the liquid junction prevention members 180 and 180 and the thicknesses of the positive electrode lead foil 111a and the negative electrode lead foil 112a, or the width of the liquid junction prevention member 180 and the opening width of the through hole 121a is as described above. However, in the bipolar lead-acid storage battery 100 and the like in each drawing of FIG. 3 and subsequent drawings, although the above relationship is maintained, dimensions such as a size, a thickness, and a length of each part are illustrated differently from actual dimensions in the bipolar lead-acid storage battery 100 for convenience of drawing. For example, the thickness of the separator 113 is originally thicker than the thickness illustrated in FIG. 3 and subsequent drawings from the thickness of each part, but is not drawn in such a manner.

Returning to FIG. 1, the first end plate 130 is a space forming member including a substrate 131 covering the positive electrode side of the cell member 110 and a frame body 132 surrounding the side surface of the cell member 110. Furthermore, the first end plate 130 includes a column 133 vertically protruding from one surface of the substrate 131 (a surface facing the substrate 121 of the bipolar plate 120 placed most on the positive electrode side).

The planar shape of the substrate 131 is rectangular, the four end surfaces of the substrate 131 are covered with the frame body 132, and the substrate 131, the frame body 132, and the column 133 are integrally formed of, for example, the above-described thermoplastic resin. Note that, although the number of columns 133 protruding from one surface of the substrate 131 may be one or plural, the number of columns 133 is a number corresponding to the number of columns 123 of the bipolar plate 120 to be brought into contact with the columns 133.

In the Z direction, a dimension of the frame body 132 is larger than a dimension (thickness) of the substrate 131, and a dimension between protruding end surfaces of the column 133 is the same as the dimension of the frame body 132. The first end plate 130 is stacked such that the frame body 132 and the column 133 are in contact with the frame body 122 and the column 123 of the bipolar plate 120 placed most on the outside (the positive electrode side).

As a result, a space C is formed between the substrate 121 of the bipolar plate 120 and the substrate 131 of the first end plate 130, and the dimension of the space C in the Z direction is maintained by the column 123 of the bipolar plate 120 and the column 133 of the first end plate 130 that are in contact with each other.

Through holes 111c, 111d, and 113a penetrating the column 133 are formed in the positive electrode lead foil 111a, the positive active material layer 111b, and the separator 113 of the cell member 110 arranged on the outermost side (positive electrode side), respectively.

A recess 131b is formed on one surface of the substrate 131 of the first end plate 130. A dimension of the recess 131b in the X direction and the Y direction corresponds to the dimension of the positive electrode lead foil 111a in the X direction and the Y direction.

The positive electrode lead foil 111a of the cell member 110 is disposed in the recess 131b of the substrate 131 of the first end plate 130 via the adhesive 150 as described above. Furthermore, similarly to the substrate 121 of the bipolar plate 120, the cover plate 160 is fixed to one surface side of the substrate 131 by the adhesive 150, and the outer edge portion of the positive electrode lead foil 111a is also covered with the cover plate 160 at the boundary portion with the peripheral edge portion of the recess 131b.

Furthermore, the first end plate 130 includes a positive electrode terminal, which is not illustrated in FIG. 1, electrically connected to the positive electrode lead foil 111a in the recess 131b.

The second end plate 140 is a space forming member including a substrate 141 covering the negative electrode side of the cell member 110 and a frame body 142 surrounding a side surface of the cell member 110. Furthermore, the second end plate 140 includes a column 143 vertically protruding from one surface of the substrate 141 (a surface facing the substrate 121 of the bipolar plate 120 placed most on the negative electrode side).

The planar shape of the substrate 141 is rectangular, the four end surfaces of the substrate 141 are covered with the frame body 142, and the substrate 141, the frame body 142, and the column 143 are integrally formed of, for example, the above-described thermoplastic resin. Note that, although the number of columns 143 protruding from one surface of the substrate 141 may be one or plural, the number of columns 143 is a number corresponding to the number of columns 123 of the bipolar plate 120 to be brought into contact with the columns 143.

In the Z direction, a dimension of the frame body 142 is larger than a dimension (thickness) of the substrate 131, and a dimension between two protruding end surfaces of the column 143 is the same as the dimension of the frame body 142. The second end plate 140 is stacked such that the frame body 142 and the column 143 are in contact with the frame body 122 and the column 123 of the bipolar plate 120 placed most on the outside (the negative electrode side).

As a result, the space C is formed between the substrate 121 of the bipolar plate 120 and the substrate 141 of the second end plate 140, and the dimension of the space C in the Z direction is maintained by the column 123 of the bipolar plate 120 and the column 143 of the second end plate 140 that are in contact with each other.

Through holes 112c, 112d, and 113a penetrating the column 143 are formed in the negative electrode lead foil 112a, the negative active material layer 112b, and the separator 113 of the cell member 110 arranged on the outermost side (negative electrode side), respectively.

A recess 141b is formed on one surface of the substrate 141 of the second end plate 140. A dimension of the recess 141b in the X direction and the Y direction corresponds to a dimension of the negative electrode lead foil 112a in the X direction and the Y direction.

The negative electrode lead foil 112a of the cell member 110 is disposed in the recess 141b of the substrate 141 of the second end plate 140 with the adhesive 150 interposed therebetween. Furthermore, the second end plate 140 includes a negative electrode terminal, which is not illustrated in FIG. 1, electrically connected to the negative electrode lead foil 112a in the recess 141b.

Here, when joining adjacent bipolar plates 120, the first end plate 130 and the adjacent bipolar plate 120, or the second end plate 140 and the adjacent bipolar plate 120, for example, various welding methods such as vibration welding, ultrasonic welding, and hot plate welding can be employed. Among the welding methods, vibration welding is performed by vibrating surfaces to be joined while pressurizing the surfaces at the time of joining, and has a fast cycle of welding and good reproducibility. Therefore, vibration welding is more preferably used.

The objects to be welded include not only frame bodies placed in facing positions on adjacent bipolar plates 120, the first end plate 130, and the second end plate 140 but also the columns.

Although not illustrated in the drawing, a cutout portion forming an injection hole for introducing an electrolyte solution into the space C is formed in one of the four end surfaces of the frame body. For example, in the case where the cutout portion is formed on a side surface of the frame body existing on the right side in the drawing, the cutout portion has a shape penetrating the frame body in the X-direction and recessed in semicircular arc shapes from both end surfaces in the Z-direction of the frame body. The cutout portion is not involved in the joint structure described above, and when the joint structure described above is formed by vibration welding, a circular injection hole is formed by the facing cutout portions.

### [Manufacturing method]

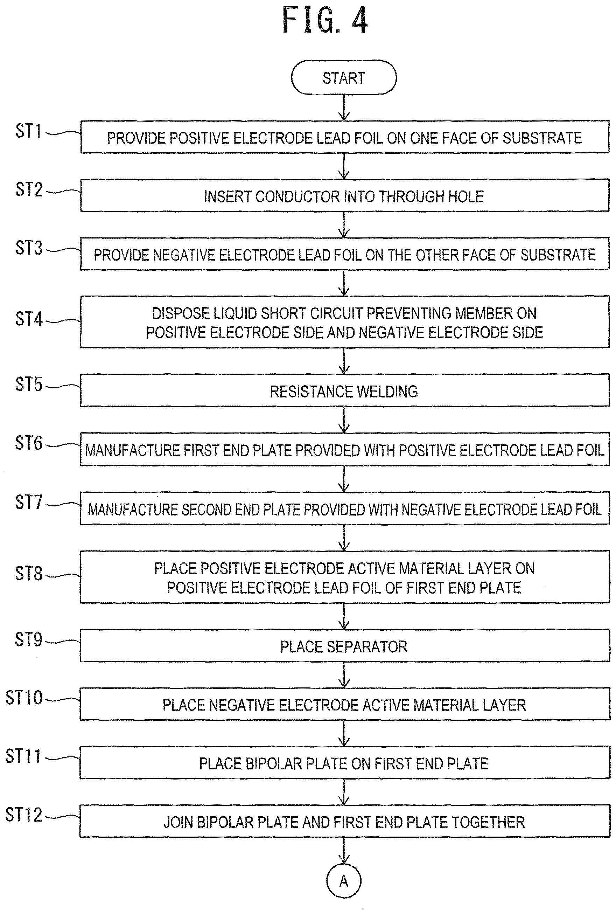

The bipolar lead-acid storage battery 100 in the first embodiment can be manufactured, for example, by a method including each step described below. Therefore, a description will be given while appropriately using the flowchart illustrated in FIG. 4. FIG. 4 is a flowchart illustrating a manufacturing flow of the bipolar lead-acid storage battery 100 according to the first embodiment of the present invention.

### <Step of producing bipolar plate equipped with positive electrode lead foil and negative electrode lead foil>

First, the substrate 121 of the bipolar plate 120 is placed on a workbench with the first recess 121b side facing upward, the adhesive 150 is applied to the first recess 121b, and the positive electrode lead foil 111a is placed in the first recess 121b. At this time, the column 123 of the bipolar plate 120 is passed through the through hole 111c of the positive electrode lead foil 111a. The adhesive 150 is cured, and the positive electrode lead foil 111a is attached to one surface of the substrate 121 (ST1).

Next, the substrate 121 is placed on the workbench with a side of the second recess 121c facing upward, and the conductor 170 is inserted into the through hole 121a (ST2). Then, the adhesive 150 is applied to the second recess 121c, and the negative electrode lead foil 112a is placed in the second recess 121c. At this time, the column 123 of the bipolar plate 120 is passed through the through hole 112c of the negative electrode lead foil 112a. The adhesive 150 is cured, and the negative electrode lead foil 112a is attached to the other surface of the substrate 121 (ST3).

Next, the substrate 121 is placed on the workbench with a side of the first recess 121b facing upward, and the adhesive 150 is applied onto the outer edge portion of the positive electrode lead foil 111a and the upper surface of the substrate 121 to be the edge portion of the first recess 121b, and the cover plate 160 is placed thereon to cure the adhesive 150. As a result, the cover plate 160 is fixed over the outer edge portion of the positive electrode lead foil 111a and the portion of the substrate 121 continuous to the outer edge portion (the peripheral edge portion of the first recess 121b).

Then, the liquid junction prevention members 180 and 180 are disposed from above the positive electrode lead foil 111a and the negative electrode lead foil 112a at a position covering both openings of the through hole 121a (ST4).

Next, resistance welding is performed to join the liquid junction prevention member 180, the positive electrode lead foil 111a, the conductor 170, and the negative electrode lead foil 112a (ST5). Thus, a bipolar plate 120 equipped with positive electrode lead foil and negative electrode lead foil is obtained. A necessary number of bipolar plates 120 equipped with positive electrode lead foil and negative electrode lead foil are prepared.

### <Step of producing end plate with positive electrode lead foil>

The substrate 131 of the first end plate 130 is placed on the workbench with a side of the recess 131b facing upward, the adhesive 150 is applied to the recess 131b, and the positive electrode lead foil 111a is placed in the recess 131b to cure the adhesive 150. At this time, the column 133 of the end plate 130 is set to pass through the through hole 111c of the positive electrode lead foil 111a. The adhesive 150 is cured to attach the positive electrode lead foil 111a to one surface of the substrate 131.

Next, the adhesive 150 is applied onto the outer edge portion of the positive electrode lead foil 111a and the upper surface of the substrate 131 to be the edge portion of the recess 131b, and the cover plate 160 is placed thereon to cure the adhesive 150. As a result, the cover plate 160 is fixed over the outer edge portion of the positive electrode lead foil 111a and the portion of the substrate 131 continuous with the outer edge portion. Thus, an end plate with a positive electrode lead foil is obtained (ST6).

### <Step of producing end plate with negative electrode lead foil>

The substrate 141 of the second end plate 140 is placed on the workbench with a side of the recess 141b facing upward, the adhesive 150 is applied to the recess 141b, and the negative electrode lead foil 112a is placed in the recess 141b to cure the adhesive 150. At this time, the column 143 of the second end plate 140 is passed through the through hole 112c of the negative electrode lead foil 112a. The adhesive 150 is cured to obtain the second end plate 140 with the negative electrode lead foil 112a attached to one surface of the substrate 141. This completes the production of the end plate with positive electrode lead foil and the end plate with a negative electrode lead foil (ST7).

### <Step of stacking and joining plates>

First, the first end plate 130 to which the positive electrode lead foil 111a and the cover plate 160 are fixed is placed on the workbench with the positive electrode lead foil 111a facing upward, and the positive active material layer 111b is placed in the cover plate 160 and placed on the positive electrode lead foil 111a (ST8). At this time, the column 133 of the first end plate 130 is passed through the through hole 111d of the positive active material layer 111b. Next, the separator 113 and the negative active material layer 112b are placed on the positive active material layer 111b (ST9 and ST10).

Next, on the first end plate 130 in this state, the negative electrode lead foil 112a side of the bipolar plate 120 equipped with positive electrode lead foil and negative electrode lead foil faces downward (ST11). At this time, the column 123 of the bipolar plate 120 passes through the through hole 113a of the separator 113 and the through hole 112d of the negative active material layer 112b to be placed on the column 133 of the first end plate 130, and the frame body 122 of the bipolar plate 120 is placed on the frame body 132 of the first end plate 130.

In this state, the first end plate 130 is fixed, and vibration welding is performed while the bipolar plate 120 is vibrated in a diagonal direction of the substrate 121. Accordingly, the frame body 122 of the bipolar plate 120 is joined onto the frame body 132 of the first end plate 130, and the column 123 of bipolar plate 120 are joined onto the column 133 of first end plate 130 (ST12).

As a result, the bipolar plate 120 is joined onto the first end plate 130, the cell member 110 is disposed in space C formed by the first end plate 130 and the bipolar plate 120, and the positive electrode lead foil 111a is exposed on an upper surface of the bipolar plate 120.

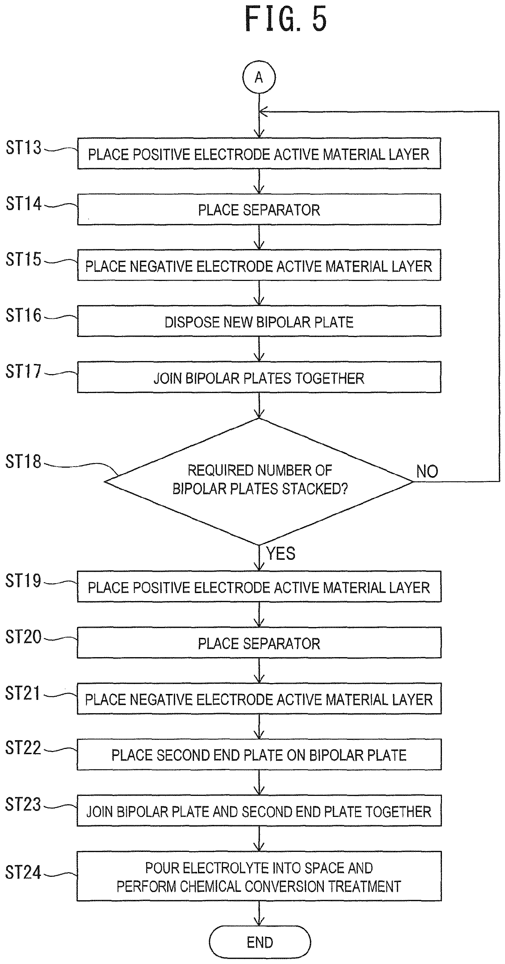

Next, after the positive active material layer 111b, the separator 113, and the negative active material layer 112b are placed in this order (ST13 to ST15 in FIG. 5) on the coupled body thus obtained in which the bipolar plate 120 is joined on the first end plate 130, another bipolar plate 120 equipped with positive electrode lead foil and negative electrode lead foil is placed with a side of the negative electrode lead foil 112a facing downward (ST16).

In this state, the coupled body is fixed, and vibration welding is performed while another bipolar plate 120 equipped with positive electrode lead foil and negative electrode lead foil is vibrated in a diagonal direction of the substrate 121 (ST17). This vibration welding step is continuously performed until the required number of bipolar plates 120 are bonded onto first end plate 130 (ST18).

Finally, the positive active material layer 111b, the separator 113, and the negative active material layer 112b are placed in this order on the uppermost bipolar plate 120 of the coupling body to which all the bipolar plates 120 are joined (ST19 to ST21), and then the second end plate 140 is placed with the negative electrode lead foil 112a side facing downward (ST22).

In this state, the coupled body is fixed, and vibration welding is performed while the second end plate 140 is vibrated in a diagonal direction of the substrate 141. As a result, the second end plate 140 is joined onto the uppermost bipolar plate 120 of the coupling body to which all the bipolar plates 120 are joined (ST23).

The flow in which the positive active material layer 111b, the negative active material layer 112b, and the separator 113 are placed on the bipolar plate 120, and the plates are stacked and joined has been described above.

### <Step of liquid injection and chemical conversion>

In the step of stacking and joining plates described above, a joint structure based on vibration welding of facing surfaces of frame bodies is formed, and a circular injection hole is formed in, for example, the position of each space C on one end surface in the X-direction of the bipolar lead-acid storage battery 100 by cutout portions of the facing frame bodies. A predetermined amount of an electrolyte solution is injected into each space C through the injection hole, and the separator 113 is impregnated with the electrolyte solution. Then, the bipolar lead-acid storage battery 100 can be manufactured by performing formation under predetermined conditions (ST24).

As described above, in the bipolar lead-acid storage battery 100 according to the first embodiment of the present invention, the liquid junction prevention members 180 and 180 are disposed so as to cover the through hole 121a, and the liquid junction prevention members 180 and 180 are joined to the positive electrode lead foil 111a, the negative electrode lead foil 112a, and the conductor 170. Since such a configuration is adopted, it is possible to provide a bipolar storage battery and a manufacturing method for a bipolar storage battery which can avoid infiltration of an electrolyte solution into a through hole even when growth occurs in a positive electrode due to corrosion by sulfuric acid contained in the electrolyte solution and, even when the electrolyte solution infiltrates into the through hole, avoid as much as possible the electrolyte solution from reaching a negative electrode side to greatly suppress occurrence of a liquid junction, thereby making it difficult for battery performance to deteriorate and making it possible to achieve a long life.

### (Second embodiment)

Next, a second embodiment in the present invention is described. Note that, in the second embodiment, the same constituent elements as those described in the above first embodiment are denoted by the same reference signs, and a description of the same constituent elements is omitted because of redundancy.

In a bipolar lead-acid storage battery 100A according to the second embodiment, the relationship between the thickness of the liquid junction prevention member 180 and the thicknesses of the positive active material layer 111b and the negative active material layer 112b is different from the relationship in the bipolar lead-acid storage battery 100 according to the first embodiment.

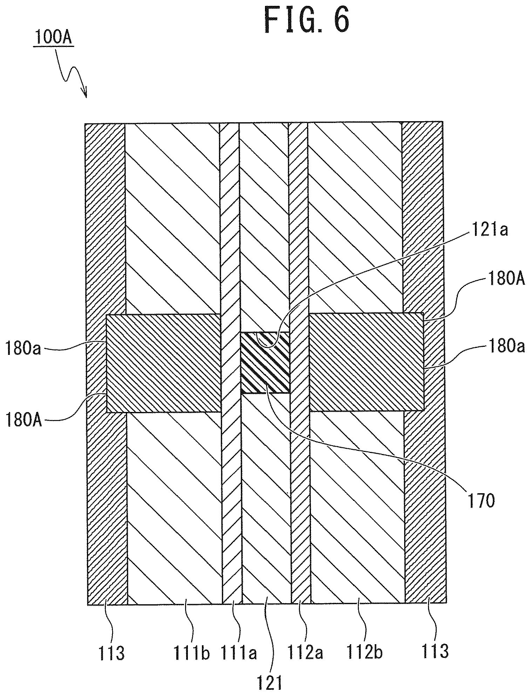

FIG. 6 is an enlarged cross-sectional view illustrating a state in which the conductor 170, liquid junction prevention members 180A and 180A, the positive electrode 111, and the negative electrode 112 are provided around the substrate 121 in the bipolar lead-acid storage battery 100A according to the second embodiment of the present invention.

The thickness of each of the liquid junction prevention members 180A and 180A is formed to be larger than the thickness of each of the positive active material layer 111b and the negative active material layer 112b when the thickness of each of the liquid junction prevention members 180A and 180A from the contact surface between the positive electrode lead foil 111a and the negative electrode lead foil 112a in the second embodiment is compared with the thickness of each of the positive active material layer 111b and the negative active material layer 112b.

That is, protrusions 180a and 180a of the liquid junction prevention member 180A protrude from the positive active material layer 111b and the negative active material layer 112b. The protrusions 180a and 180a are in contact with the separator 113 disposed in contact with the positive active material layer 111b and the negative active material layer 112b.

That is, the thickness of the liquid junction prevention member 180A in the second embodiment is formed to be thicker than the thickness of the liquid junction prevention member 180 in the first embodiment. By increasing the thickness, the through hole 121a is more reliably sealed. In particular, when resistance welding is performed, the portion in contact with the electrode is recessed, but since the thickness can still be secured even in consideration of this recess, it is possible to prevent the electrolyte solution from entering the through hole 121a.

Note that, as described above, in a case where the positive active material layer 111b and the negative active material layer 112b are disposed on the positive electrode lead foil 111a and the negative electrode lead foil 112a, respectively, the protrusions 180a and 180a of the liquid junction prevention member 180A protrude from the positive active material layer 111b and the negative active material layer 112b. Therefore, the positive active material layer 111b and the negative active material layer 112b are formed so as to be able to penetrate the protrusions 180a and 180a of the liquid junction prevention member 180A.

However, although the positive active material layer 111b and the negative active material layer 112b are formed so as to be able to penetrate the liquid junction prevention members 180A and 180A in this manner, the manufacturing flow of the bipolar lead-acid storage battery 100A is as described in the first embodiment.

As described above, in the bipolar lead-acid storage battery 100A according to the second embodiment of the present invention, the liquid junction prevention members 180A and 180A are disposed so as to cover the through hole 121a, and are joined to the positive electrode lead foil 111a, the negative electrode lead foil 112a, and the conductor 170. Since such a configuration is adopted, it is possible to provide a bipolar storage battery and a manufacturing method for a bipolar storage battery which can avoid infiltration of an electrolyte solution into a through hole even when growth occurs in a positive electrode due to corrosion by sulfuric acid contained in the electrolyte solution and, even when the electrolyte solution infiltrates into the through hole, avoid as much as possible the electrolyte solution from reaching a negative electrode side to greatly suppress occurrence of a liquid junction, thereby making it difficult for battery performance to deteriorate and making it possible to achieve a long life.

Furthermore, since the bipolar lead-acid storage battery 100 is formed to be thicker than the liquid junction prevention member 180 in the first embodiment, the effect of caulking the through hole 121a in the conductor 170 when resistance welding is performed is further increased.

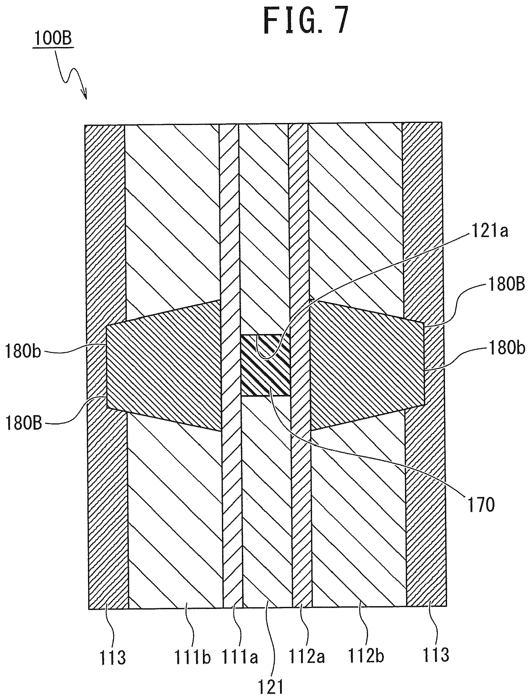

FIG. 7 is an enlarged cross-sectional view illustrating a modification of the bipolar lead-acid storage battery 100A in the second embodiment of the present invention. In a bipolar lead-acid storage battery 100B illustrated in the modification, as illustrated in FIG. 7, the shape of a liquid junction prevention member 180B is different from that of the liquid junction prevention member 180A described above. That is, the liquid junction prevention member 180A has a rectangular shape in a cross-sectional view, but the liquid junction prevention member 180B is formed to have a trapezoidal shape in a cross-sectional view.

That is, when a width of a protrusion 180b in contact with the separator 113 is compared with a width in contact with the positive electrode lead foil 111a or the negative electrode lead foil 112a, the former width is shorter than the latter width, and the liquid junction prevention member 180B is formed such that the width increases from the separator 113 side toward the positive electrode lead foil 111a or the negative electrode lead foil 112a side.

As described above, since the liquid junction prevention member 180B is formed to be wider than the liquid junction prevention member 180A described so far with respect to the opening of the through hole 121a, the opening can be more reliably closed. Therefore, it is possible to prevent liquid junction from occurring more than ever.

### (Third embodiment)

Next, a third embodiment of the present invention will be described. Note that, in the third embodiment, the same components as those described in the first and second embodiments are denoted by the same reference signs, and the description of the same components will be omitted because they overlap.

A bipolar lead-acid storage battery 100C according to the third embodiment is different from the bipolar lead-acid storage batteries according to the first and second embodiments in that the positive active material layer 111b and the negative active material layer 112b are provided in two layers, respectively.

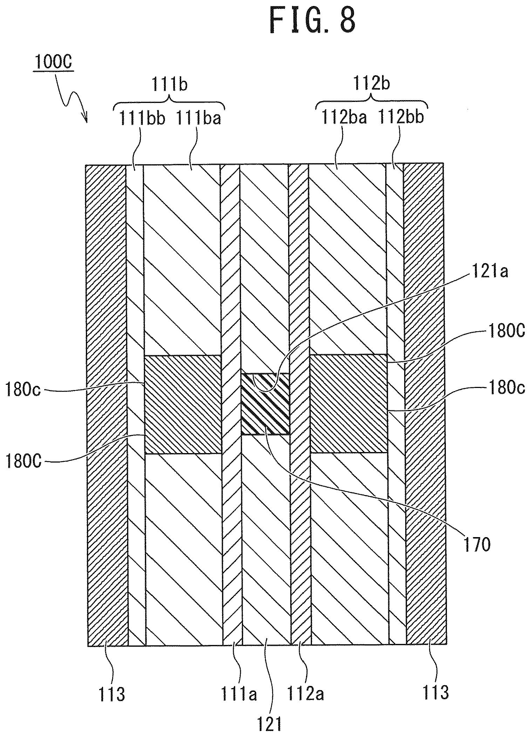

FIG. 8 is an enlarged cross-sectional view illustrating a state in which the conductor 170, liquid junction prevention members 180C and 180C, the positive electrode 111, and the negative electrode 112 are provided around the substrate 121 in the bipolar lead-acid storage battery 100C according to the third embodiment of the present invention.

On the other hand, the positive active material layer 111b and the negative active material layer 112b are provided over two layers. That is, the positive active material layer 111b includes the first positive active material layer 111ba and the second positive active material layer 111bb. Furthermore, the negative active material layer 112b includes a first negative active material layer 112ba and a second negative active material layer 112bb.

The first positive active material layer 111ba and the first negative active material layer 112ba are formed to have the same thickness as the liquid junction prevention member 180C. As described above, since the thickness of the liquid junction prevention member 180C is the same as the thicknesses of the first positive active material layer 111ba and the first negative active material layer 112ba, protrusions 180c and 180c of the liquid junction prevention members 180C and 180C are exposed without being covered with the first positive active material layer 111ba or the first negative active material layer 112ba only by providing the first positive active material layer 111ba and the first negative active material layer 112ba.

Therefore, the second positive active material layer 111bb and the second negative active material layer 112bb are separately provided in contact with the first positive active material layer 111ba and the first negative active material layer 112ba. With such a configuration, the protrusions 180c and 180c of the liquid junction prevention members 180C and 180C are covered with the second positive active material layer 111bb and the second negative active material layer 112bb. Therefore, for example, unlike the bipolar lead-acid storage battery 100A in the first embodiment, the reaction area is widened by the protrusion 180c. Therefore, the bipolar lead-acid storage battery 100C according to the embodiment of the present invention can be expected to have improved performance as compared with the conventional bipolar lead-acid storage battery 100.

In order to achieve such a structure, the first positive active material layer 111ba and the first negative active material layer 112ba are provided with through holes that can penetrate the liquid junction prevention members 180C and 180C. On the other hand, the second positive active material layer 111bb and the second negative active material layer 112bb are disposed so as to be in contact with the first positive active material layer 111ba and the first negative active material layer 112ba, and further to cover the protrusions 180c and 180c of the liquid junction prevention members 180C and 180C, so that through holes such as the first positive active material layer 111ba and the first negative active material layer 112ba are not provided.

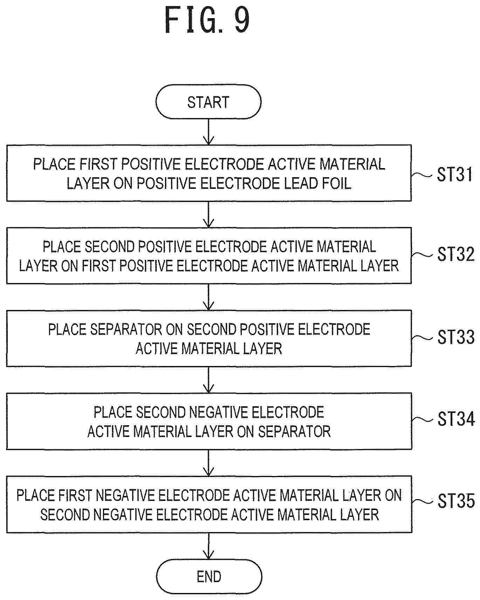

Next, the flow of manufacturing the bipolar lead-acid storage battery 100C in the third embodiment described above is as follows. FIG. 9 is a flowchart illustrating a manufacturing flow of the bipolar lead-acid storage battery 100C according to the third embodiment of the present invention.

A flow of production of the bipolar lead-acid storage battery 100C in the third embodiment will be described by exemplifying provision of the positive active material layer 111b and the negative active material layer 112b between the two bipolar plates 120. This corresponds to the portion of steps ST13 to ST15 illustrated in FIG. 5 regarding the flow of manufacturing the bipolar lead-acid storage battery 100 according to the first embodiment.

That is, the first positive active material layer 111ba is placed on the positive electrode lead foil 111a provided on the bipolar plate 120 (ST31). At this time, a through hole provided in the first positive active material layer 111ba is placed so as to pass through the liquid junction prevention member 180C.

The second positive active material layer 111bb is placed on the first positive active material layer 111ba (ST32). When the second positive active material layer 111bb is placed, the protrusion 180c of the liquid junction prevention member 180C is covered with the second positive active material layer 111bb.

Then, the separator 113 is placed on the second positive active material layer 111bb (ST33), and the second negative active material layer 112bb is further placed on the separator 113 (ST34). Finally, the first negative active material layer 112ba is placed on the second negative active material layer 112bb (ST35).

In a case where the bipolar plate 120 is further stacked thereafter, the protrusion 180c of the liquid junction prevention member 180C provided in the bipolar plate 120 stacked in the through hole provided in the first negative active material layer 112ba is placed so as to be fitted. The positive active material layer 111b, the separator 113, and the negative active material layer 112b are placed in this order.

Note that here, the stacking of the positive active material layer 111b and the negative active material layer 112b has been described by exemplifying the case where the two bipolar plates 120 are stacked. However, in FIG. 9, a drawing illustrating a manufacturing flow is omitted, but the same applies to a case where the positive active material layer 111b and the negative active material layer 112b are stacked when the bipolar plate 120 and the first end plate 130, and the bipolar plate 120 and the second end plate 140 are stacked.

As described above, in the bipolar lead-acid storage battery 100C according to the third embodiment of the present invention, the liquid junction prevention members 180C and 180C are disposed so as to cover the through hole 121a, and the liquid junction prevention member 180C is joined to the positive electrode lead foil 111a, the negative electrode lead foil 112a, and the conductor 170. Since such a configuration is adopted, it is possible to provide a bipolar storage battery and a manufacturing method for a bipolar storage battery which can avoid infiltration of an electrolyte solution into a through hole even when growth occurs in a positive electrode due to corrosion by sulfuric acid contained in the electrolyte solution and, even when the electrolyte solution infiltrates into the through hole, avoid as much as possible the electrolyte solution from reaching a negative electrode side to greatly suppress occurrence of a liquid junction, thereby making it difficult for battery performance to deteriorate and making it possible to achieve a long life.

Note that, in the bipolar lead-acid storage battery 100C in the third embodiment described above, the thicknesses of the first positive active material layer 111ba and the first negative active material layer 112ba are assumed to be equal to the thickness of the liquid junction prevention member 180C. However, for example, the thicknesses of the first positive active material layer 111ba and the first negative active material layer 112ba may be thinner than the thickness of the liquid junction prevention member 180C. Also in this case, by placing the second positive active material layer 111bb and the second negative active material layer 112bb on the first positive active material layer 111ba and the first negative active material layer 112ba so as to cover the liquid junction prevention member 180C, respectively, it is possible to obtain the same effect as the above-described effect.

### (Fourth embodiment)

Next, the fourth embodiment of the present invention will be described. Note that, in the fourth embodiment, the same constituent elements as those described in the above-described first to third embodiments are denoted by the same reference signs, and redundant description of the same constituent elements will be omitted.

In the bipolar lead-acid storage battery 100 according to each of the first to third embodiments described so far, the conductor 170 and the liquid junction prevention member 180 are configured as different members. In the fourth embodiment, a bipolar lead-acid storage battery 100D including a conductor 170A in which the conductor 170 and the liquid junction prevention member 180 are integrated will be described.

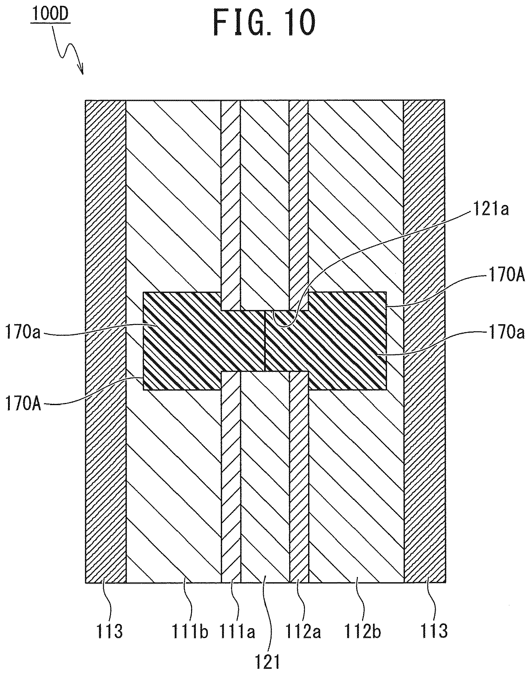

FIG. 10 is an enlarged cross-sectional view illustrating a state in which a conductor 170A, a positive electrode 111, and a negative electrode 112 are provided around a substrate 121 in the bipolar lead-acid storage battery 100D according to the fourth embodiment of the present invention. The conductor 170A in the fourth embodiment includes a liquid junction prevention unit 170a that performs the function of the liquid junction prevention member 180 described above.

Therefore, the conductor 170A is the same as the conventional conductor 170 in that it is inserted into the through hole 121a provided in the substrate 121. However, the conductor 170A protrudes through the through hole 121a and reaches a position where the liquid junction prevention member 180 described above is disposed.

That is, as illustrated in FIG. 10, similarly to the liquid junction prevention member 180, the width of the liquid junction prevention unit 170a in the conductor 170A is larger than the opening width of the through hole 121a, and when the conductor 170A is inserted into the through hole 121a, the liquid junction prevention unit 170a is in contact with the positive electrode lead foil 111a and the negative electrode lead foil 112a. Therefore, the conductor 170A is formed to have a substantially T shape.

Note that in FIG. 10, both the positive active material layer 111b and the negative active material layer 112b are disposed so as to cover the liquid junction prevention unit 170a in the conductor 170A, but the positive active material layer 111b and the negative active material layer 112b may have the shapes described in the third embodiment, for example.

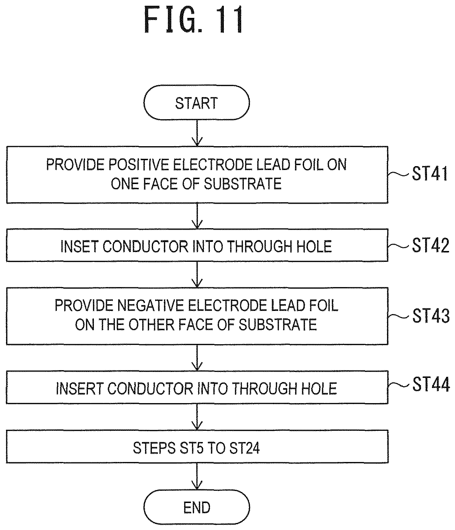

Next, a manufacturing method for the bipolar lead-acid storage battery 100D having such a structure will be described below with reference to FIG. 11. FIG. 11 is a flowchart illustrating the flow of manufacturing the bipolar lead-acid storage battery 100D according to the fourth embodiment of the present invention.

The positive electrode lead foil 111a is provided on one surface of the substrate 121 as described above. However, the positive electrode lead foil 111a used in the fourth embodiment is different in that a through hole is provided in a portion of the through hole 121a (ST41). This is because a conductor 170A described later is inserted into the through hole 121a through this portion. That is, the conductor 170A is inserted into the through hole 121a so as to sandwich the positive electrode lead foil 111a (ST42).

On the other hand, similarly on the negative electrode side, the negative electrode lead foil 112a provided with a through hole into which the conductor 170A is inserted is provided on the other surface of the substrate 121 (ST43), and the conductor 170A is inserted into the through hole 121a so as to sandwich the negative electrode lead foil 112a (ST44). Note that the subsequent processes illustrated in steps ST5 to ST24 are as described in the first embodiment.

As described above, the conductor 170A in the bipolar lead-acid storage battery 100D according to the fourth embodiment of the present invention includes the liquid junction prevention unit 170a. When the conductor 170A is inserted into the through hole 121a, the liquid junction prevention unit 170a is disposed so as to cover the through hole 121a. Then, the positive electrode lead foil 111a and the negative electrode lead foil 112a are joined. Since such a configuration is adopted, it is possible to provide a bipolar storage battery and a manufacturing method for a bipolar storage battery which can avoid infiltration of an electrolyte solution into a through hole even when growth occurs in a positive electrode due to corrosion by sulfuric acid contained in the electrolyte solution and, even when the electrolyte solution infiltrates into the through hole, avoid as much as possible the electrolyte solution from reaching a negative electrode side to greatly suppress occurrence of a liquid junction, thereby making it difficult for battery performance to deteriorate and making it possible to achieve a long life.

Furthermore, since the conductor and the liquid junction prevention member are integrally formed, the liquid junction prevention unit 170a is also arranged only by inserting the conductor 170A into the through hole 121a. Therefore, in the manufacturing process of the bipolar lead-acid storage battery 100D, as compared with the conventional manufacturing process of the bipolar lead-acid storage battery 100, it is possible to reduce one step of placing the liquid junction prevention member 180 in addition to the conductor 170, and thus, it is possible to further shorten the takt time of manufacturing.

### (Fifth embodiment)

Next, the fifth embodiment of the present invention will be described. Note that, in the fifth embodiment, the same constituent elements as those described in the above-described first to fourth embodiments are denoted by the same reference signs, and redundant description of the same constituent elements will be omitted.

A bipolar lead-acid storage battery 100E according to the fifth embodiment of the present invention is different in structure from the bipolar lead-acid storage battery 100 described so far in that an insulating layer 190 is disposed at the portion of a protrusion 180e of a liquid junction prevention member 180E.

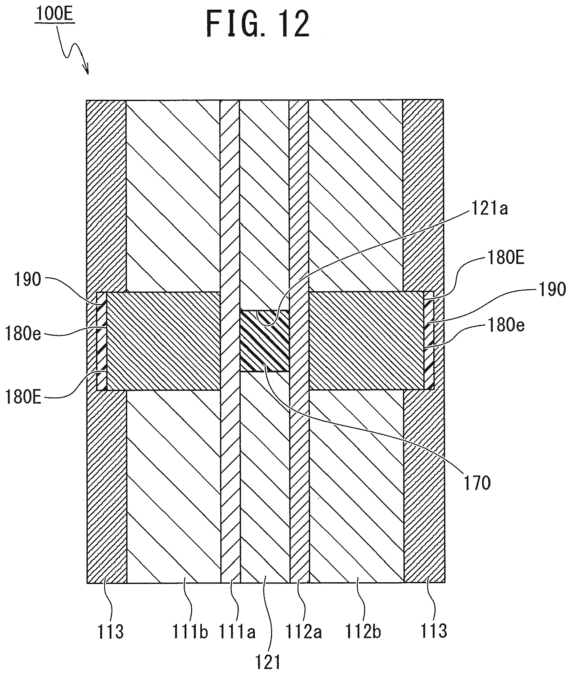

FIG. 12 is an enlarged cross-sectional view illustrating a state in which the conductor 170, the liquid junction prevention members 180E and 180E, the insulating layer 190, the positive electrode 111, and the negative electrode 112 are provided around the substrate 121 in the bipolar lead-acid storage battery 100E according to the fifth embodiment of the present invention. As illustrated in FIG. 12, the insulating layers 190 and 190 are provided so as to cover the protrusions 180e and 180e of the liquid junction prevention members 180E and 180E.

In a case where the thickness of the liquid junction prevention member 180E is larger than the thicknesses of the positive active material layer 111b and the negative active material layer 112b, the liquid junction prevention member 180E is disposed such that the protrusions 180e and 180e protrude from the positive active material layer 111b and the negative active material layer 112b. In this case, the protrusions 180e and 180e are covered with the separator 113 as in the bipolar lead-acid storage battery 100A illustrated in FIG. 6 described in the second embodiment described above.

However, when the liquid junction prevention member 180E is formed in such a shape, it is conceivable that the protrusions 180e of the liquid junction prevention member 180E at positions facing each other between the substrate 121 and the adjacent substrate 121 are brought into contact with each other and shortcircuited. Therefore, by providing the insulating layer 190 so as to cover the protrusion 180e of the liquid junction prevention member 180E, the occurrence of the above-described situation is prevented.

As the insulating layer 190, for example, an epoxy resin or the like can be used. Furthermore, the insulating layer 190 is disposed at a position covering at least the protrusion 180e of the liquid junction prevention member 180E. However, the same effect can be obtained by, for example, placing the sheet-like insulating layer 190 between the positive active material layer 111b, the negative active material layer 112b, and the separator 113 instead of being disposed only at such a position.

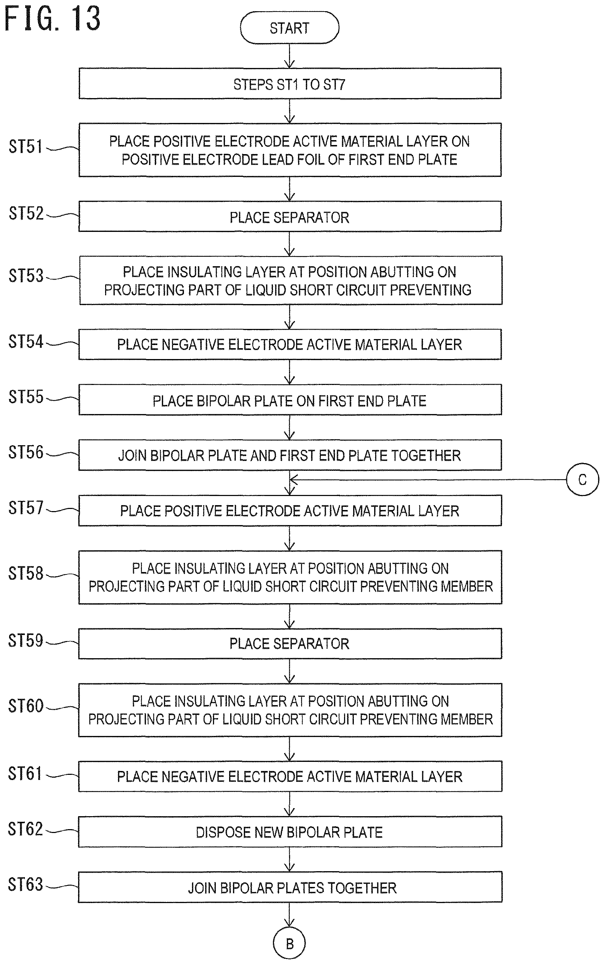

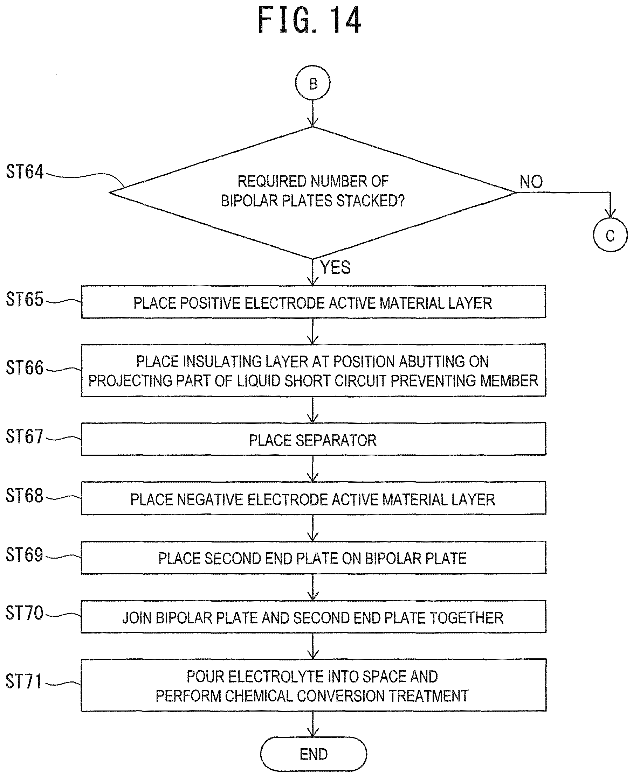

Next, a manufacturing method for the bipolar lead-acid storage battery 100E having such a structure will be described below with reference to FIGS. 13 and 14. FIGS. 13 and 14 are flowcharts illustrating the flow of manufacturing the bipolar lead-acid storage battery 100E according to the fifth embodiment of the present invention.

In the production of the bipolar lead-acid storage battery 100E in the fifth embodiment, processes after the end plate is manufactured are different. Therefore, in the following description of the manufacturing flow, description of steps ST1 to ST7 illustrating steps of manufacturing the bipolar plate 120, the first end plate 130, and the second end plate 140 is omitted.

Furthermore, the step of preparing the first end plate 130, placing the positive active material layer 111b in the cover plate 160 on the positive electrode lead foil 111a, passing the column 133 of the first end plate 130 through the through hole 111d of the positive active material layer 111b at that time, and placing the separator 113 on the positive active material layer 111b are also as described in the third embodiment (ST51, ST52) .

Next, the insulating layer 190 is placed on the separator 113 at a position corresponding to the protrusion 180e of the liquid junction prevention member 180E (ST53). Then, the negative active material layer 112b is placed on the insulating layer 190 (ST54). The negative active material layer 112b is provided with a through hole through which the liquid junction prevention member 180E passes.

Then, on the first end plate 130 in this state, the negative electrode lead foil 112a side of the bipolar plate 120 equipped with positive electrode lead foil and negative electrode lead foil faces downward (ST55). At this time, the column 123 of the bipolar plate 120 passes through the through hole 113a of the separator 113 and the through hole 112d of the negative active material layer 112b to be placed on the column 133 of the first end plate 130, and the frame body 122 of the bipolar plate 120 is placed on the frame body 132 of the first end plate 130.

In this state, the first end plate 130 is fixed, and vibration welding is performed while the bipolar plate 120 is vibrated in the diagonal direction of the substrate 121 (ST56). Accordingly, the frame body 122 of the bipolar plate 120 is joined onto the frame body 132 of the first end plate 130, and the column 123 of the bipolar plate 120 is joined onto the column 133 of the first end plate 130.

Next, the positive active material layer 111b is placed on the positive electrode lead foil 111a provided on the joined bipolar plate 120 (ST57). The positive active material layer 111b is provided with a through hole through which the liquid junction prevention member 180E passes. Then, the insulating layer 190 is placed on the protrusion 180e of the liquid junction prevention member 180E (ST58).

The separator 113 is placed so as to cover the liquid junction prevention member 180E on which the insulating layer 190 is placed (ST59), and the insulating layer 190 is placed on the separator 113 at a position where the protrusion 180e of the liquid junction prevention member 180E is disposed (ST60). Moreover, the negative active material layer 112b is placed on the insulating layer 190 (ST61).

Then, the new bipolar plates 120 are stacked (ST62), and the bipolar plates 120 are joined to each other (ST63). The stacking and joining of the bipolar plates 120 are repeated in the procedure described from step ST57 to step ST63 until the required number of the bipolar plates 120 are stacked (NO in ST64).

In a case where the required number of bipolar plates 120 are stacked (YES in ST64), stacking for joining the second end plate 140 and the bipolar plate 120 is finally performed. That is, first, the positive active material layer 111b is placed on the positive electrode lead foil 111a provided on the bipolar plate 120 (ST65). Then, the insulating layer 190 is placed on the protrusion 180e of the liquid junction prevention member 180E (ST66).

Next, the separator 113 is placed (ST67), and the negative active material layer 112b is placed on the separator 113 (ST68). The second end plate 140 is stacked thereon and joined, and finally an electrolyte solution is injected into the space C (ST69 to ST71).

In the production of the bipolar lead-acid storage battery 100E in the fifth embodiment, after the positive active material layer 111b is provided, before the separator 113 is provided, the insulating layer 190 is provided in the portion of the protrusion 180e of the liquid junction prevention member 180E. Then, after the separator 113 is placed and before the negative active material layer 112b is placed on the separator 113, the insulating layer 190 is provided at the portion of the protrusion 180e of the liquid junction prevention member 180E provided on the negative electrode side.

Since the configuration as described above is adopted, it is possible to provide a bipolar storage battery and a manufacturing method for a bipolar storage battery capable of avoiding infiltration of an electrolyte solution into a through hole even when growth occurs in a positive electrode due to corrosion by sulfuric acid contained in the electrolyte solution, and preventing occurrence of a liquid junction by avoiding the electrolyte solution from reaching a negative electrode side as much as possible even when the electrolyte solution infiltrates into the through hole to significantly suppress occurrence of a liquid junction, thereby making it difficult for battery performance to deteriorate and prolonging the life.

Furthermore, in the bipolar lead-acid storage battery 100E according to the fifth embodiment of the present invention, the insulating layer 190 is provided in a portion of the protrusion 180e of the liquid junction prevention member 180E. Therefore, it is possible to prevent the electrode arranged at the opposing positions constituting the cell member 110 from coming into contact with the protrusion 180e of the liquid junction prevention member 180E. Therefore, it is possible to prevent occurrence of a short circuit between the poles disposed at the opposing positions constituting the cell member 110.

Note that in the fifth embodiment, as described above, the method of manufacturing the bipolar lead-acid storage battery 100E by the method of disposing the insulating layer 190 on the positive active material layer 111b or the separator 113 at the position where the protrusion 180e of the liquid junction prevention member 180E is disposed has been described. However, the manufacturing method is not limited to this method, and for example, at the stage of manufacturing the bipolar plate 120, it is also possible to adopt a method in which the insulating layers 190 are provided in the portions of the protrusions 180e of the liquid junction prevention members 180E provided on the positive electrode side and the negative electrode side, respectively, and then stacked.

Note that in the first to fifth embodiments described above, an example has been described in which the liquid junction prevention member 180 is provided on both the positive electrode side and the negative electrode side. This is because the effect of each of the embodiments described so far is more effectively exhibited by providing the liquid junction prevention member 180 on both poles.

However, even if the liquid junction prevention member 180 is provided on either the positive electrode side or the negative electrode side as in the case where the liquid junction prevention member is provided only on the negative electrode side, the effect in each of the above-described embodiments can be sufficiently exhibited without being provided on both electrodes.

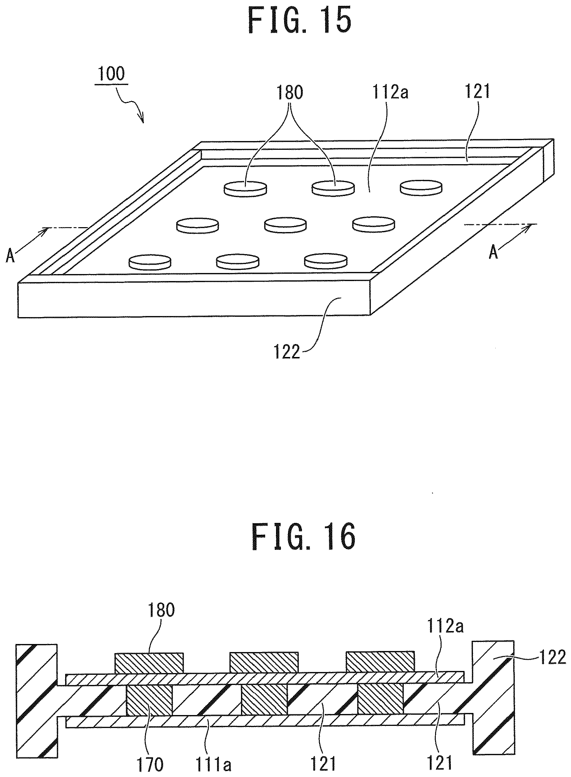

Here, FIG. 15 is a perspective view illustrating an example in which the liquid junction prevention member 180 according to the embodiment of the present invention is provided in at least one of the vicinity of the opening on the positive electrode side and the vicinity of the opening on the negative electrode side of the through hole 121a. Furthermore, FIG. 16 is a sectional view of the bipolar plate 120 taken along line A-A in FIG. 15.

FIG. 15 illustrates the bipolar plate 120 which is a space forming member of the bipolar lead-acid storage battery 100, and the frame body 122 surrounds the substrate 121 as described above. The negative electrode lead foil 112a is disposed on the substrate 121. Therefore, FIG. 15 illustrates an example in which the liquid junction prevention member 180 is provided on the negative electrode side.

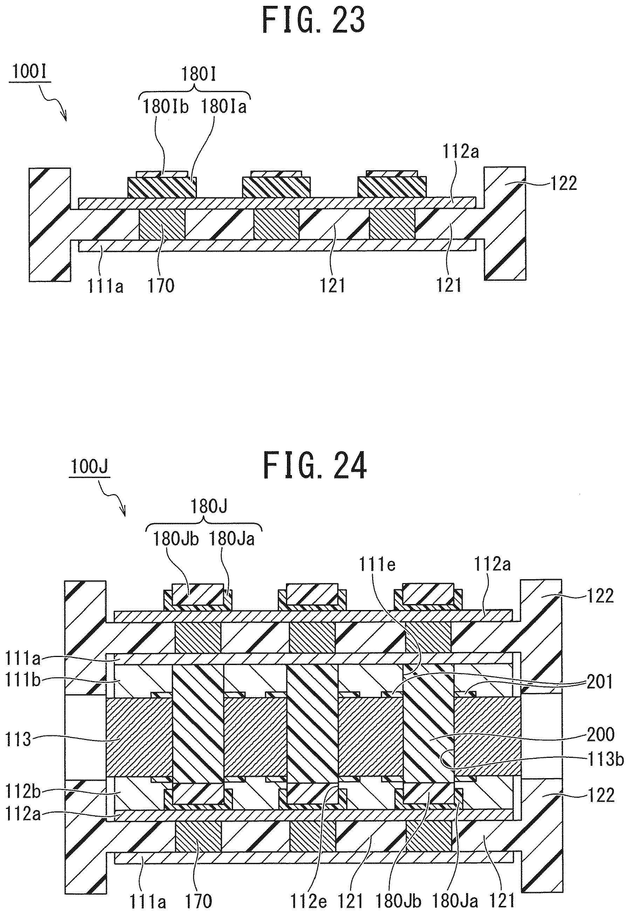

Note that each of the drawings up to FIG. 24 described below illustrates an example in which the liquid junction prevention member 180 is provided on the negative electrode side as in FIG. 15. For convenience of explaining an example in which the liquid junction prevention member 180 is provided on either the positive electrode side or the negative electrode side as described above, a perspective view is appropriately used as in FIG. 15, and hatching in the perspective view is omitted to clearly illustrate a positional relationship of each part constituting the cell member 110 appearing in each drawing such as the liquid junction prevention member 180 and the negative electrode lead foil 112a. Moreover, in FIG. 15 and subsequent drawings, the illustration of the columns 123 is also omitted for convenience of description.

Furthermore, although the cross-sectional views are also described as appropriate, the positional relationship of each part described with reference to FIG. 1 and subsequent drawings and the positional relationship thereof may be slightly different. However, this is merely drawn as described above for convenience of description, and the structure of each part is not different from the structure described above.

As illustrated in FIGS. 15 and 16, the liquid junction prevention member 180 is disposed in contact with the negative electrode lead foil 112a in the vicinity of the opening of the through hole 121a. On the other hand, the liquid junction prevention member 180 is not provided on the positive electrode side.

As described above, by providing the liquid junction prevention member 180 only on either the positive electrode side or the negative electrode side of the bipolar plate 120, unlike the case where the liquid junction prevention member 180 is provided on both electrodes, it is possible to reduce labor, cost, and the like required for manufacturing the bipolar lead-acid storage battery 100.

Furthermore, when the liquid junction prevention member 180 is provided on either the positive electrode side or the negative electrode side of the bipolar plate 120, the growth can be further suppressed by providing the liquid junction prevention member on the positive electrode side. On the other hand, when the liquid junction prevention member 180 is provided, it is necessary to consider the structure inside the cell member 110. However, in a case where the liquid junction prevention member 180 is provided on the negative electrode side, it is needless to say that growth can be suppressed, and the structure to be considered is less on the negative electrode side than on the positive electrode side, and the liquid junction prevention member 180 can be more effectively provided due to its arrangement and the like.

### (Sixth embodiment)

Next, the sixth embodiment of the present invention will be described. Note that, in the sixth embodiment, the same components as those described in each of the above-described embodiments are denoted by the same reference signs, and the description of the same components will be omitted because they overlap.

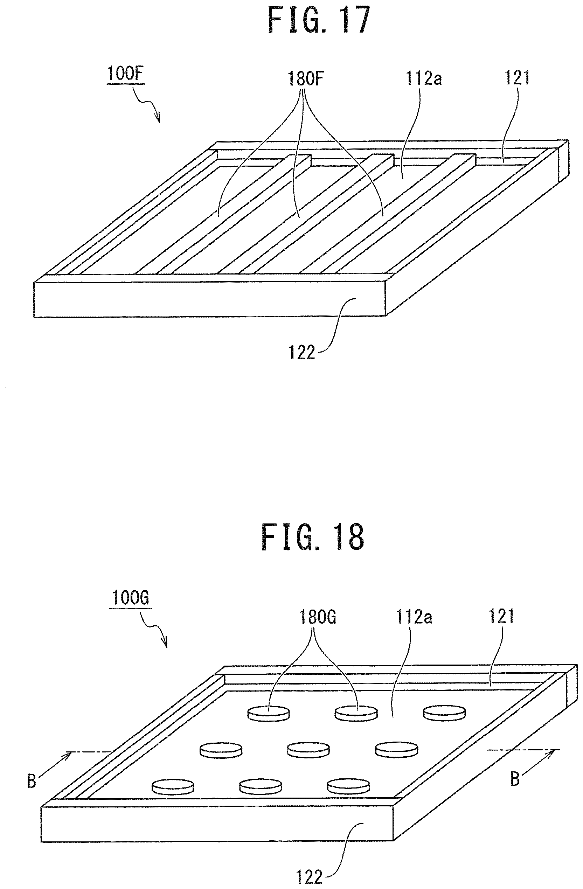

FIG. 17 is a perspective view illustrating an example in which a liquid junction prevention member 180F is provided in the vicinity of the opening of the through hole 121a in the bipolar lead-acid storage battery 100F according to the sixth embodiment of the present invention. The liquid junction prevention member 180F illustrated in FIG. 17 is continuously disposed in the vicinity of the opening of each of the through holes 121a and in the vicinity of the opening of the through hole 121a provided adjacent to each of the through holes, and both end portions thereof extend to the outer edge portion of the negative electrode lead foil 112a.

Here, it is assumed that the through hole 121a of the bipolar plate 120 is formed at a position as illustrated in FIG. 15. Therefore, the liquid junction prevention member 180F is provided not only in the vicinity of the opening of each of the through holes 121a of the three through holes 121a but also in a portion connecting the opening of each of the adjacent through holes 121a.

That is, instead of being arranged only in the vicinity of the opening of each of the through holes 121a as in the liquid junction prevention member 180 in each of the above-described embodiments, the liquid junction prevention member 180F having a large area covering the opening of the plurality of through holes 121a is used.

As a result, as illustrated in FIG. 17, the liquid junction prevention member 180F in the sixth embodiment has a shape divided into three parts in contact with the negative electrode lead foil 112a. Each of the liquid junction prevention members 180F is formed in one long quadrangular prism shape. Furthermore, both end portions of the liquid junction prevention member 180F extend to the outer edge of the negative electrode lead foil 112a, and the ends face the frame body 122. The liquid junction prevention member 180F is manufactured integrally with the negative electrode lead foil 112a.

As described above, in the bipolar lead-acid storage battery 100F according to the sixth embodiment of the present invention, the liquid junction prevention member 180F is continuously disposed in the vicinity of the opening of each of the through holes 121a and in the vicinity of the opening of the through hole 121a provided adjacent to each of the through holes, and both end portions of the liquid junction prevention member extend to the outer edge of the negative electrode lead foil 112a. Since the liquid junction prevention member 180F is formed in such a shape, the liquid junction prevention member 180F is formed in a region having a larger area of the negative electrode lead foil 112a. Therefore, the rigidity of the entire negative electrode lead foil 112a is improved, and even if the electrolyte solution enters from the positive electrode side through the through hole 121a, the negative electrode lead foil 112a can be prevented from floating, and the generation of the growth can be suppressed.

Furthermore, as described above, the liquid junction prevention member 180F is disposed so as to connect (traverse) the facing outer edge portions of the negative electrode lead foil 112a, and the liquid junction prevention member 180F and the negative electrode lead foil 112a are integrally manufactured, whereby the rigidity of the entire negative electrode lead foil 112a can be improved as described above, so that the negative electrode lead foil 112a itself can be made thinner. Therefore, productivity of the negative electrode lead foil 112a can be improved.

Moreover, as described above, by providing the liquid junction prevention member 180F only on either the positive electrode side or the negative electrode side of the bipolar plate 120, it is possible to achieve an effect of reducing labor, cost, and the like required for manufacturing the bipolar lead-acid storage battery 100F.

Note that here, three liquid junction prevention members 180F are formed so as to be parallel to each other, but as long as the liquid junction prevention members can be formed so as to connect the vicinities of the opening portions of the plurality of adjacent through holes 121a, for example, the liquid junction prevention members 180F may be formed so as to connect a pair of diagonals of the negative electrode lead foil 112a, or the liquid junction prevention members 180F may be formed so as to have an L shape so as to connect two sides of the negative electrode lead foil 112a.

Furthermore, the flow of manufacturing the bipolar lead-acid storage battery 100F in the sixth embodiment can be manufactured with the flow described with reference to FIGS. 4 and 5, for example. Furthermore, instead of this flow, for example, the liquid junction prevention member 180F may be formed on the negative electrode lead foil 112a and then provided in the second recess 121c of the substrate 121.

### (Seventh embodiment)

Next, a seventh embodiment of the present invention will be described. Note that, in the seventh embodiment, the same components as those described in each of the above-described embodiments are denoted by the same reference signs, and the description of the same components will be omitted because they overlap.

Although the sixth embodiment has been described so far, the liquid junction prevention member 180 in each of these embodiments is made of a metal material such as lead as described above. A liquid junction prevention member 180G in a seventh embodiment described below is made of a material other than metal.

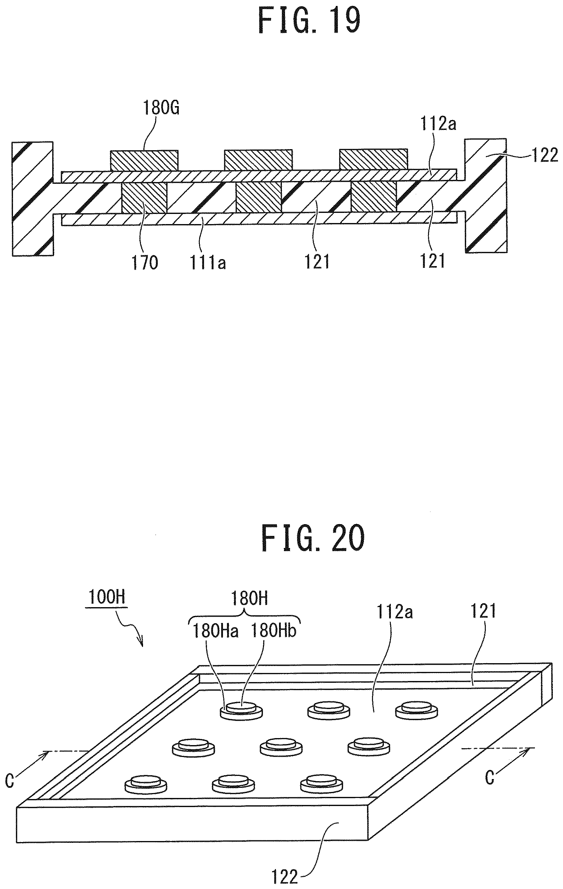

FIG. 18 is a perspective view illustrating an example in which a liquid junction prevention member 180G is provided in the vicinity of the opening of the through hole 121a in a bipolar lead-acid storage battery 100G according to the seventh embodiment of the present invention. Furthermore, FIG. 19 is a sectional view of the bipolar plate 120 taken along line B-B in FIG. 18.

The drawings illustrated in FIGS. 18 and 19 are not different from the drawings illustrated in FIGS. 15 and 16 in shape. However, as described above, the material of the liquid junction prevention member 180 is different. The liquid junction prevention member 180G in the seventh embodiment is formed of an adhesive.

That is, the liquid junction prevention member 180G is formed of, for example, a cured product obtained by curing a reaction-curable adhesive that is cured by reaction between a main agent containing an epoxy resin and a curing agent containing an amine compound. This reaction-curable adhesive is an adhesive of a type in which a main agent containing an epoxy resin and a curing agent containing an amine compound are mixed, and the main agent and the curing agent are reacted and cured.

Since such a reaction-curable adhesive agent can be cured at normal temperature (for example, 20°C or higher and 40°C or lower), it can be cured at a temperature that hardly affects the metal structure of lead or a lead alloy forming the positive electrode lead foil 111a and the negative electrode lead foil 112a. Moreover, the reaction-curable adhesive hardly adversely affects the thermoplastic resin forming the substrate 111. Moreover, the reaction-curable adhesive has advantages such as high adhesiveness and long pot life.

As the adhesive to be used, specifically, examples of the epoxy resin contained in the main agent include at least one of a bisphenol A type epoxy resin and a bisphenol F type epoxy resin. Furthermore, one kind of the epoxy resin may be used singly, or two or more kinds thereof may be used in combination.

On the other hand, examples of the amine compound contained in the curing agent include an aliphatic polyamine compound, an alicyclic polyamine compound, and an aromatic polyamine compound. For these amine compounds, one kind may be used alone, or two or more kinds may be used in combination.

Furthermore, specific examples of the aliphatic polyamine compound include aliphatic primary amines such as triethylenetetramine (C6H18N4) and aliphatic secondary amines such as triethylenetetramine. Specific examples of the alicyclic polyamine compound include alicyclic primary amines such as isophoronediamine (C10H22N2). Specific examples of the aromatic polyamine compound include aromatic primary amines such as diaminodiphenylmethane (C13H14N2).

Moreover, examples of the curing agent include an acid anhydride and a phenol curing agent. These acid anhydrides and phenolic curing agents are used as the curing agent because of their strong resistance against sulfuric acid.

Here, examples of the acid anhydrides include aromatic carboxylic acid anhydrides, aliphatic acid anhydrides, and alicyclic acid anhydrides. Among them, examples of the aromatic carboxylic anhydride include phthalic anhydride, trimellitic anhydride, pyromellitic anhydride, benzophenonetetracarboxylic anhydride, and ethylene glycol trimellitic anhydride.

Furthermore, examples of the aliphatic acid anhydride include azelaic acid, sebacic acid, and dodecanedioic acid. Moreover, examples of the alicyclic acid anhydride include tetrahydrophthalic anhydride (THPA), hexahydrophthalic anhydride (HHPA), methyltetrahydrophthalic anhydride (Me-THPA), methylhexahydrophthalic anhydride (Me-HHPA) nadic acid anhydride (NMA), and himic anhydride (MHAC) het anhydride.

On the other hand, examples of the phenolic curing agent that may be mentioned include: bisphenol A; tetrabromobisphenol A; bisphenol F; bisphenol S; 4,4'-biphenylphenol; 2,2'-methylene-bis(4-methyl-6-tertbutylphenol); 2,2'-methylene-bis(4-ethyl-6-tertbutylphenol); 4,4'-butylylene-bis(3-methyl-6-tertbutylphenol); 1,1,3-tris(2-methyl-4-hydroxy-5-tertbutylphenol); trishydroxyphenylmethane; pyrogallol; phenols having a diisopropylidene skeleton; phenols having a fluorene skeleton such as 1,1-di-4-hydroxyphenylfluorene; polyphenol compounds such as phenolated polybutadiene; novolak resins made from various phenols such as phenol, cresols, ethylphenols, butylphenols, octylphenols, bisphenol A, brominated bisphenol A, bisphenol F, bisphenol S, and naphthols as raw materials; and various novolak resins such as xylylene skeleton-containing phenol novolak resins, dicyclopentadiene skeleton-containing phenol novolak resins, and fluorene skeleton-containing phenol novolak resins.

A curing accelerator can be further used for the acid anhydride or the phenolic curing agent described above. The curing accelerator is used because of that the use of the curing accelerator enables to lower the temperature originally required for curing the acid anhydride or the phenolic curing agent, and to reduce the curing time. When the curing time can be shortened, then the takt time it takes to manufacture the bipolar lead battery itself is shortened.

As the curing accelerator, there can be used triphenylphosphine (TPP), a tertiary amine (DMP-30: 2,4,6-tris(dimethylaminomethyl)phenol), an amine-based curing accelerator (DBU: 1,8-diazabicyclo[5.4.0]undec-7-ene), an imidazole (2PZ-CN: 1-(2-cyanoethyl)-2-phenylimidazole), a borate ester, a Lewis acid, an organometallic compound, an organometallic acid salt, or the like. Note that, these curing accelerators may be used singly or in combination of two or more kinds thereof.

As described above, in the bipolar lead-acid storage battery 100G according to the seventh embodiment of the present invention, the liquid junction prevention member 180G is formed of an adhesive. By using the adhesive as the liquid junction prevention member 180G in this manner, it is possible to prevent the negative electrode lead foil 112a from being peeled off from the substrate 121 (growth occurs) even when the electrolyte solution enters the negative electrode side from the positive electrode side through the through hole 121a.

Furthermore, if the electrolyte solution that has entered the negative electrode side cannot be stopped and the electrolyte solution is allowed to enter the negative electrode lead foil 112a and the negative active material layer 112b, the life of the bipolar lead-acid storage battery 100G is shortened.

Therefore, by disposing the liquid junction prevention member 180G formed of the adhesive having the above-described configuration in the vicinity of the opening of the through hole 121a on the negative electrode side, the electrolyte solution entering from the through hole 121a changes its entering direction and travels along the interface between the liquid junction prevention member 180G and the negative electrode lead foil 112a.

That is, since the creepage distance into which the electrolyte solution enters can be extended, the life of the bipolar lead-acid storage battery 100G can be extended. Furthermore, by widening the arrangement region of the liquid junction prevention member 180G, the life can be further extended.

Note that, as described above, providing the liquid junction prevention member 180G only on one of the positive electrode side and the negative electrode side of the bipolar plate 120 can reduce the trouble, cost, and the like required for manufacturing the bipolar lead-acid storage battery 100G.

### (Eighth embodiment)

Next, an eighth embodiment of the present invention will be described. Note that, in the eighth embodiment, the same components as those described in each of the above-described embodiments are denoted by the same reference signs, and the description of the same components will be omitted because they overlap.

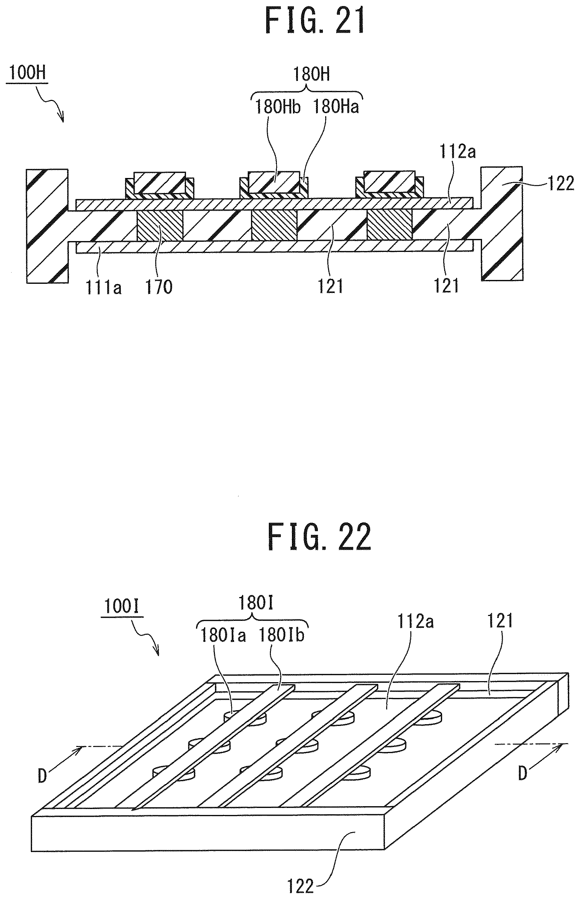

FIG. 20 is a perspective view illustrating an example in which a liquid junction prevention member 180H is provided in the vicinity of the opening of the through hole 121a in a bipolar lead-acid storage battery 100H according to the eighth embodiment of the present invention. Furthermore, FIG. 21 is a sectional view of the bipolar plate 120 taken along line C-C in FIG. 20.

The liquid junction prevention member 180H in the eighth embodiment is not made of metal, similarly to the liquid junction prevention member 180G in the seventh embodiment described above. Furthermore, the liquid junction prevention member 180H includes two liquid junction prevention members, a first liquid junction prevention member 180Ha and a second liquid junction prevention member 180Hb.

That is, as illustrated in FIG. 20 or FIG. 21, the first liquid junction prevention member 180Ha is disposed in contact with the negative electrode lead foil 112a, and the second liquid junction prevention member 180Hb is disposed in contact with the first liquid junction prevention member 180Ha and in contact with the negative active material layer 112b (not illustrated in FIGS. 20 and 21).

Therefore, the second liquid junction prevention member 180Hb plays a role of pressing the first liquid junction prevention member 180Ha toward the positive electrode side, and it is possible to prevent or delay the infiltration of the electrolyte solution from the positive electrode side to the negative electrode side.

Here, the first liquid junction prevention member 180Ha is formed of an adhesive. Examples of the adhesive that can be used as the first liquid junction prevention member 180Ha include a cured product obtained by curing a reaction-curable adhesive in which a main agent containing an epoxy resin and a curing agent containing an amine compound react with each other and cure as described in the seventh embodiment.

On the other hand, second liquid junction prevention member 180Hb is made of resin. As the resin that can be adopted, for example, a non-conductive material (non-conductive resin) such as an ABS resin, a thermoplastic resin such as polypropylene, or ceramic can be adopted. This is because any of these is excellent in resistance to sulfurization and acidity and is a non-conductor that does not conduct electricity, and even if an electrolyte solution enters through the through hole 121a, it is possible to prevent the entry from the negative electrode lead foil 112a into the negative active material layer 112b.

As described above, the bipolar lead-acid storage battery 100H according to the eighth embodiment of the present invention includes the first liquid junction prevention member 180Ha formed of an adhesive and the second liquid junction prevention member 180Hb formed of a resin. Moreover, in the liquid junction prevention member 180H in the eighth embodiment, the second liquid junction prevention member 180Hb is disposed in contact with the first liquid junction prevention member 180Ha. With such a configuration, the second liquid junction prevention member 180Hb presses the first liquid junction prevention member 180Ha.

Therefore, as a matter of course of the effect of using the adhesive for the liquid junction prevention member 180 described above, a force is further applied from the second liquid junction prevention member 180Hb toward the through hole 121a. That is, even if the electrolyte solution enters from the positive electrode side to the negative electrode side, it is possible to prevent the negative electrode lead foil 112a from expanding and floating due to oxidation, and it is possible to delay the growth extension. This contributes to prolonging the life of the bipolar lead-acid storage battery 100H.

As described above, the second liquid junction prevention member 180Hb is in contact with the negative active material layer 112b, and the negative active material layer 112b is in contact with the separator 113. The separator 113 is formed of, for example, a glass fiber mat impregnated with an electrolyte solution containing sulfuric acid, and has elasticity. Since the second liquid junction prevention member 180Hb is disposed at a position closer to the separator 113 than the liquid junction prevention member 180G described above, the second liquid junction prevention member 180Hb is pressed toward the through hole 121a by receiving the pressure of the separator 113. Therefore, the effect on growth is further increased.

Note that, as described above, providing the liquid junction prevention member 180H only on one of the positive electrode side and the negative electrode side of the bipolar plate 120 can reduce labor, cost, and the like required for manufacturing the bipolar lead-acid storage battery 100H.

### (Ninth embodiment)

Next, a ninth embodiment of the present invention will be described. Note that, in the ninth embodiment, the same components as those described in each of the above-described embodiments are denoted by the same reference signs, and the description of the same components will be omitted because they overlap.

A liquid junction prevention member 1801 according to the ninth embodiment of the present invention has the same function as the liquid junction prevention member 180H according to the eighth embodiment, but has a different configuration. FIG. 22 is a perspective view illustrating an example in which the liquid junction prevention member 1801 is provided in the vicinity of the opening of the through hole 121a in a bipolar lead-acid storage battery 100I according to the ninth embodiment of the present invention. Furthermore, FIG. 23 is a sectional view of the bipolar plate 120 taken along line D-D in FIG. 22.

That is, in the liquid junction prevention member 180H in the eighth embodiment, each second liquid junction prevention member 180Hb is in contact with each first liquid junction prevention member 180Ha. On the other hand, the liquid junction prevention member 1801 in the ninth embodiment also includes a first liquid junction prevention member 180Ia and a second liquid junction prevention member 180Ib.

However, the second liquid junction prevention member 180Ib is not individually in contact with each of the individual first liquid junction prevention members 180Ia, and as is clear from FIG. 22, the individual first liquid junction prevention members 180Ia are connected and continuously arranged. Therefore, the second liquid junction prevention member 180Ib is disposed so as to cross the negative electrode lead foil 112a.

Furthermore, both end portions of the second liquid junction prevention member 180Ib are joined to the frame body 122 disposed at positions facing each other. Then, both end portions of the second liquid junction prevention member 180Ib and the frame body 122 are joined by, for example, the vibration welding described above.

As described above, since both end portions of the second liquid junction prevention member 180Ib that serves to press the first liquid junction prevention member 180Ia are fixed to the frame body 122, a force acts toward the through hole 121a, and it is possible to suppress uplift of the negative electrode lead foil 112a due to expansion of the growth.

Note that, as described above, providing the liquid junction prevention member 1801 only on one of the positive electrode side and the negative electrode side of the bipolar plate 120 can reduce labor, cost, and the like required for manufacturing the bipolar lead-acid storage battery 100I.

### (Tenth embodiment)

Next, a tenth embodiment of the present invention will be described. Note that, in the tenth embodiment, the same components as those described in each of the above embodiments are denoted by the same reference signs, and the description of the same components will be omitted because they overlap.

FIG. 24 is a cross-sectional view illustrating a press mechanism 200 in which a liquid junction prevention member 180J is provided in the vicinity of the opening of the through hole 121a and further provided so as to penetrate the cell member 110 in the bipolar lead-acid storage battery 100J according to the tenth embodiment of the present invention.

The liquid junction prevention member 180J according to the tenth embodiment of the present invention also includes a first liquid junction prevention member 180Ja and a second liquid junction prevention member 180Jb. Furthermore, the first liquid junction prevention member 180Ja is in contact with the negative electrode lead foil 112a, and the second liquid junction prevention member 180Jb is in contact with the first liquid junction prevention member 180Ja, which is the same as the liquid junction prevention members 180H and 180I described above.

Therefore, in the liquid junction prevention member 180J in the tenth embodiment described below, in particular, the shape of the second liquid junction prevention member 180Jb may be the shape of the second liquid junction prevention member 180Hb of the liquid junction prevention member 180H or the shape of the second liquid junction prevention member 180Ib of the liquid junction prevention member 180I.

In the bipolar lead-acid storage battery 100J in the tenth embodiment, the press mechanism 200 that penetrates the cell member 110 accommodated between the adjacent space forming members 120 is provided. The press mechanism 200 is formed of, for example, a non-conductive material such as ABS resin, polypropylene, ceramic, or glass. As illustrated in FIG. 24, one end side of the press mechanism 200 is in contact with the second liquid junction prevention member 180Jb. On the other hand, the other end side of the press mechanism 200 is in contact with the positive electrode lead foil 111a.

Therefore, the press mechanism 200 is disposed inside so as to penetrate the cell member 110. Therefore, through holes 112e, 113b, and 111e through which the press mechanism 200 passes are formed in the negative active material layer 112b, the separator 113, and the positive active material layer 111b, respectively.

Since such a press mechanism 200 is provided so as to penetrate the cell member 110 such that one end side thereof is in contact with the second liquid junction prevention member 180Jb and the other end side thereof is in contact with the positive electrode lead foil 111a, the second liquid junction prevention member 180Jb is strongly pressed toward the through hole 121a. Therefore, even if the electrolyte solution infiltrates from the positive electrode side to the negative electrode side to generate growth, the negative electrode lead foil 112a can be prevented from expanding and floating.

Moreover, the press mechanism 200 includes a cover member 201 that separates the separator 113 from the positive active material layer 111b or the negative active material layer 112b in the vicinity of the through holes 112e, 113b, and 111e provided in the respective portions of the cell member 110 in order to enable the cell member 110 to penetrate.

By providing such a cover member 201, it is possible to prevent occurrence of a short circuit due to movement of the active material among the positive active material layer 111b, the negative active material layer 112b, and the separator 113 through the through holes 112e, 113b, and 111e.

Note that, as described above, providing the liquid junction prevention member 180J only on one of the positive electrode side and the negative electrode side of the bipolar plate 120 can reduce labor, cost, and the like required for manufacturing the bipolar lead-acid storage battery 100J.

### (Eleventh embodiment)

Next, an eleventh embodiment of the present invention will be described. Note that, in the eleventh embodiment, the same components as those described in each of the above embodiments are denoted by the same reference signs, and the description of the same components will be omitted because they overlap.

The liquid junction prevention member 180 can be provided on either or both of the positive electrode side and the negative electrode side. In particular, in the sixth and subsequent embodiments, the case where the liquid junction prevention member 180 is provided on the negative electrode side has been described as an example. In the eleventh embodiment, a case where the liquid junction prevention member 180 is provided on the positive electrode side will be described as an example.

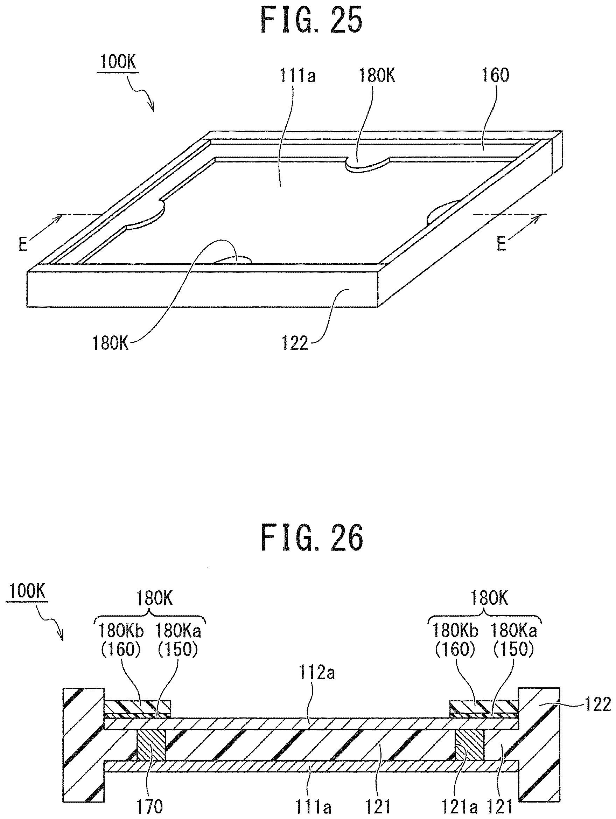

FIG. 25 is a perspective view illustrating an example in which a liquid junction prevention member 180K is provided in the vicinity of the opening of the through hole 121a in a bipolar lead-acid storage battery 100K according to the eleventh embodiment of the present invention. Furthermore, FIG. 26 is a sectional view of the bipolar plate 120 taken along line E-E in FIG. 25.

As described above, the cover plate 160 is provided on the peripheral edge portion of the positive electrode lead foil 111a (See, e.g., FIG. 1.). As illustrated in FIG. 26, for example, when the through hole 121a is formed in the vicinity of the frame body 122 of the bipolar plate 120, the cover plate 160, the adhesive 150 for joining the cover plate 160 and the positive electrode lead foil 111a can be used as the liquid junction prevention member 180K.

That is, the liquid junction prevention member 180K in the eleventh embodiment includes the adhesive 150 and the cover plate 160. The adhesive 150 corresponds to the first liquid junction prevention member 180Ka, and the cover plate 160 corresponds to the second liquid junction prevention member 180Kb.

That is, furthermore, since the first liquid junction prevention member 180Ka (adhesive 150) is pressed by the second liquid junction prevention member 180Kb (cover plate 160), it is possible to suppress the expansion of the growth in the positive electrode lead foil 111a due to the infiltration of the electrolyte solution described above.

Furthermore, as described above, by providing the member originally provided in the bipolar lead-acid storage battery 100K to have the role of the liquid junction prevention member 180K, it becomes unnecessary to prepare a special liquid junction prevention member 180 and to provide various additional steps by providing the liquid junction prevention member 180. Therefore, various disadvantages due to infiltration of the electrolyte solution can be avoided with fewer materials and processing processes.

Then, by providing the liquid junction prevention member 180K only on the positive electrode side of the bipolar plate 120, it is also possible to reduce labor, cost, and the like required for manufacturing the bipolar lead-acid storage battery 100K.

Since the configuration as described in the sixth to eleventh embodiments is adopted, it is possible to provide a bipolar storage battery and a manufacturing method for a bipolar storage battery which can avoid the infiltration of the electrolytic solution into the through hole even when the growth occurs in the positive electrode due to the corrosion by the sulfuric acid contained in the electrolyte solution, and even when the electrolyte solution infiltrates into the through hole, the electrolyte solution is avoided as much as possible to reach the negative electrode side to greatly suppress the occurrence of the liquid junction, so that the battery performance is less likely to deteriorate, and the life can be extended.

Note that the technology described in the embodiment of the present invention can adopt the following configuration.
(1) A bipolar storage battery including:
   a cell member including a positive electrode including a positive electrode current collector and a positive active material layer, a negative electrode including a negative electrode current collector and a negative active material layer, and an electrolyte layer interposed between the positive electrode and the negative electrode, the cell member being stacked and disposed at an interval;
   a space forming member including a substrate covering at least one of a positive electrode side and a negative electrode side of the cell member and a frame body surrounding a side surface of the cell member, the space forming member forming a plurality of spaces individually accommodating a plurality of the cell members;
   a through hole formed to penetrate between the positive electrode side and the negative electrode side in the space forming member; and
   a conductor inserted into the through hole to electrically connect the positive electrode side and the negative electrode side,
   in which a liquid junction prevention member is provided in at least one of a vicinity of an opening on the positive electrode side and a vicinity of an opening on the negative electrode side of the through hole.
(2) The bipolar storage battery according to (1) described above, in which the liquid junction prevention member is joined to the conductor.
(3) The bipolar storage battery according to (1) or (2) described above, in which a thickness of the liquid junction prevention member, the thickness being an amount of protrusion from the positive electrode current collector or the negative electrode current collector, is larger than a thickness of the substrate.
(4) The bipolar storage battery according to any one of (1) to (3) described above, in which a width of the liquid junction prevention member is larger than an opening width of the through hole.
(5) The bipolar storage battery according to any one of (1) to (4) described above, in which a thickness of the positive active material layer or the negative active material layer is larger than or equal to a thickness of the liquid junction prevention member.
(6) The bipolar storage battery according to any one of (1) to (4) described above, in which a thickness of the positive active material layer or the negative active material layer is thinner than a thickness of the liquid junction prevention member.
(7) The bipolar storage battery according to (5) described above, in which, in a case where a first positive active material layer having a thickness less than or equal to a thickness of the liquid junction prevention member is disposed on the positive electrode current collector and a first negative active material layer having a thickness less than or equal to the thickness of the liquid junction prevention member is disposed on the negative electrode current collector, a second positive active material layer is further disposed on the first positive active material layer and a second negative active material layer is further disposed on the first negative active material layer.
(8) The bipolar storage battery according to any one of (1) to (7) described above, in which the liquid junction prevention member is formed integrally with the conductor as a liquid junction prevention unit.
(9) The bipolar battery according to (8) described above, in which a width of the liquid junction prevention unit is larger than an opening width of the through hole, and in a case where the conductor is inserted into the through hole, the liquid junction prevention unit is in contact with the positive electrode current collector and the negative electrode current collector.
(10) The bipolar storage battery according to any one of (1) to (9) described above, in which an insulating layer is provided in the liquid junction prevention member or the liquid junction prevention unit of the conductor in a region facing the electrolyte layer.
(11) The bipolar storage battery according to any one of (1) to (9) described above, in which the liquid junction prevention member is continuously disposed in a vicinity of the opening of each of the through holes and in a vicinity of the opening of each of the through holes provided adjacent to each other, and both end portions of the liquid junction prevention member extend to an outer edge portion of the positive electrode current collector or the negative electrode current collector.
(12) The bipolar storage battery according to any one of (1) to (11) described above, in which the liquid junction prevention member or the liquid junction prevention unit of the conductor is manufactured by casting or forging.
(13) The bipolar storage battery according to any one of (1), and (3) to (7) described above, in which the liquid junction prevention member is formed of an adhesive.
(14) The bipolar storage battery according to (13) described above, in which the liquid junction prevention member is formed of a cured product of a reaction-curable adhesive that is cured by reaction between a main agent containing an epoxy resin and a curing agent containing an amine compound.
(15) The bipolar storage battery according to any one of (1), (3) to (7), (13), and (14) described above, further including:
   a first liquid junction prevention member formed of the adhesive; and
   a second liquid junction prevention member disposed in contact with the first liquid junction prevention member,
   in which the second liquid junction prevention member is formed of resin.
(16) The bipolar storage battery according to (15) described above, in which the second liquid junction prevention member is formed of a thermoplastic resin.
(17) The bipolar storage battery according to (15) or (16) described above, in which the second liquid junction prevention member is continuously disposed by connecting the first liquid junction prevention member disposed in a vicinity of the opening of each of the through holes, and both end portions of the second liquid junction prevention member are joined to the frame body disposed at a position facing the both end portions.
(18) The bipolar secondary battery according to any one of (15) to (17) described above, in which a press mechanism configured to penetrate the cell member accommodated between the space forming members adjacent to each other is provided, one end side of the press mechanism is disposed in contact with any one of the second liquid junction prevention member, the positive electrode current collector, or the negative electrode current collector, and another end side of the press mechanism is disposed in contact with any one of the positive electrode current collector, the negative electrode current collector, or the second liquid junction prevention member.
(19) The bipolar storage battery according to (17) described above, in which the press mechanism includes a cover member configured to partition the positive active material layer or the negative active material layer and the separator in a vicinity of the through hole provided in each part of the cell member to allow penetration through the cell member.
(20) The bipolar storage battery according to (15) or (16) described above,
   in which in a case where the liquid junction prevention member is provided in the vicinity of the opening on the positive electrode side of the through hole,
   the second liquid junction prevention member is a cover plate configured to cover a peripheral portion of the positive electrode current collector.
(21) The bipolar storage battery according to any one of (1) to (20) described above, in which the positive electrode current collector and the negative electrode current collector are made of lead or a lead alloy.
(22) A manufacturing method for a bipolar storage battery, including:
   inserting a conductor into a through hole provided to penetrate one surface and another surface of a substrate of a space forming member;
   disposing a positive electrode current collector on the one surface;
   disposing a negative electrode current collector on the other surface;
   disposing a liquid junction prevention member to cover at least one of the through holes from above the positive electrode current collector and the negative electrode current collector;
   performing welding to sandwich between the disposed liquid junction prevention member on a side of the positive electrode current collector and the disposed liquid junction prevention member on a side of the negative electrode current collector, or in a case where the liquid junction prevention member is disposed on either the side of the positive electrode current collector or the negative electrode current collector, to sandwich between the liquid junction prevention member and the negative electrode current collector or between the liquid junction prevention member and the positive electrode current collector, and joining the liquid junction prevention member, the positive electrode current collector, the negative electrode current collector, and the conductor;
   disposing a positive active material layer to be in contact with the positive electrode current collector; and
   disposing a negative active material layer to be in contact with the negative electrode current collector.
(23) A manufacturing method for a bipolar storage battery, including:
   inserting a conductor into a through hole provided to penetrate one surface and another surface of a substrate of a space forming member;
   disposing a liquid junction prevention member to cover at least one of the through holes from above a positive electrode current collector and a negative electrode current collector;
   disposing the positive electrode current collector on the one surface;
   disposing the negative electrode current collector on the other surface;
   performing welding to sandwich between the disposed liquid junction prevention member on a side of the positive electrode current collector and the disposed liquid junction prevention member on a side of the negative electrode current collector, or in a case where the liquid junction prevention member is disposed on either the side of the positive electrode current collector or the negative electrode current collector, to sandwich between the liquid junction prevention member and the negative electrode current collector or between the liquid junction prevention member and the positive electrode current collector, and joining the liquid junction prevention member, the positive electrode current collector, the negative electrode current collector, and the conductor;
   disposing a positive active material layer to be in contact with the positive electrode current collector; and
   disposing a negative active material layer to be in contact with the negative electrode current collector.
(24) A manufacturing method for a bipolar storage battery, including:
   disposing a positive electrode current collector on one surface of a substrate of a space forming member;
   disposing a negative electrode current collector on another surface of the substrate;
   inserting, from a side of the positive electrode current collector, a conductor including a liquid junction prevention unit integrally formed into a through hole provided to penetrate the one surface and the other surface of the substrate;
   inserting, from a side of the negative electrode current collector, the conductor including the liquid junction prevention unit into the through hole;
   performing welding to sandwich the liquid junction prevention unit on the side of the positive electrode current collector and the liquid junction prevention unit on the side of the negative electrode current collector that are disposed, and joining the positive electrode current collector, the negative electrode current collector, and the conductor including the liquid junction prevention unit;
   disposing a positive active material layer to be in contact with the positive electrode current collector; and
   disposing a negative active material layer to be in contact with the negative electrode current collector.
(25) The manufacturing method for a bipolar storage battery according to any one of (22) to (24) described above, in which thicknesses of the positive active material layer and the negative active material layer are larger than or equal to a thickness being an amount of protrusion from the liquid junction prevention member, or the positive electrode current collector or the negative electrode current collector of the liquid junction prevention unit.
(26) The manufacturing method for a bipolar storage battery according to any one of (22) to (24) described above, in which thicknesses of the positive active material layer and the negative active material layer are thinner than a thickness being an amount of protrusion from the liquid junction prevention member, or the positive electrode current collector or the negative electrode current collector of the liquid junction prevention unit.
(27) The manufacturing method for a bipolar storage battery according to (26) described above, further including, after disposing a first positive active material layer and a first negative active material layer having a thickness less than or equal to a thickness being an amount of protrusion from the liquid junction prevention member, or the positive electrode current collector or the negative electrode current collector of the liquid junction prevention unit, disposing a second positive active material layer and a second negative active material layer to cover a protrusion of the liquid junction prevention member or the liquid junction prevention unit.
(28) The manufacturing method for a bipolar storage battery according to any one of (22) to (27) described above, further including,
   after disposing the positive active material layer and disposing the negative active material layer,
   providing an insulating layer in a region facing an electrolyte layer in the liquid junction prevention member or the liquid junction prevention unit.
(29) The manufacturing method for a bipolar storage battery according to any one of (22) to (24) described above, in which the liquid junction prevention member includes a first liquid junction prevention member disposed in a vicinity of an opening of the through hole and a second liquid junction prevention member continuously disposed by connecting each of the first liquid junction prevention members, the manufacturing method further including joining both end portions of the second liquid junction prevention member to a frame disposed at a position facing the both end portions.

Note that, as described above, in the embodiments of the present invention, a bipolar lead-acid storage battery has been described as an example. However, when the above description applies also to other storage batteries in which other metals are used instead of lead for current collectors, the application of the above description is not excluded, as a matter of course.

### Reference Signs List

- 100 to 100K: bipolar lead-acid storage battery
- 110: cell member
- 111: positive electrode
- 112: negative electrode
- 111a: positive electrode lead foil
- 112a: negative electrode lead foil
- 111b: positive active material layer
- 112b: negative active material layer
- 113: separator
- 120: biplate
- 121: substrate of biplate
- 121a: through hole of substrate
- 122: frame body of biplate
- 130: first end plate
- 131: substrate of first end plate
- 132: frame body of first end plate
- 140: second end plate
- 141: substrate of second end plate
- 142: frame body of second end plate
- 150: adhesive
- 160: cover plate
- 170: conductor
- 180 to 180K: liquid junction prevention member
- 180a: protrusion
- 190: insulating layer
- 200: press mechanism
- 201: cover member
- C: space for accommodating cell member

## Claims

1. A bipolar storage battery comprising:
a cell member including a positive electrode including a positive electrode current collector and a positive active material layer, a negative electrode including a negative electrode current collector and a negative active material layer, and an electrolyte layer interposed between the positive electrode and the negative electrode, the cell member being stacked and disposed at an interval;
a space forming member including a substrate covering at least one of a positive electrode side and a negative electrode side of the cell member and a frame body surrounding a side surface of the cell member, the space forming member forming a plurality of spaces individually accommodating a plurality of the cell members;
a through hole formed to penetrate between the positive electrode side and the negative electrode side in the space forming member; and
a conductor inserted into the through hole to electrically connect the positive electrode side and the negative electrode side,
wherein a liquid junction prevention member is provided in at least one of a vicinity of an opening on the positive electrode side and a vicinity of an opening on the negative electrode side of the through hole.

2. The bipolar storage battery according to claim 1, wherein the liquid junction prevention member is disposed between at least one of the positive electrode current collector and the negative electrode current collector and the electrolyte layer, and is disposed in contact with at least one of the positive electrode current collector and the negative electrode current collector.

3. The bipolar storage battery according to claim 1, wherein the liquid junction prevention member is joined to the conductor.

4. The bipolar storage battery according to claim 1, wherein a thickness of the liquid junction prevention member, the thickness being an amount of protrusion from the positive electrode current collector or the negative electrode current collector, is larger than a thickness of the substrate.

5. The bipolar storage battery according to claim 1, wherein a width of the liquid junction prevention member is larger than an opening width of the through hole.

6. The bipolar storage battery according to claim 1, wherein a thickness of the positive active material layer or the negative active material layer is larger than or equal to a thickness of the liquid junction prevention member.

7. The bipolar storage battery according to claim 1, wherein a thickness of the positive active material layer or the negative active material layer is thinner than a thickness of the liquid junction prevention member.

8. The bipolar storage battery according to claim 6, wherein, in a case where a first positive active material layer having a thickness less than or equal to a thickness of the liquid junction prevention member is disposed on the positive electrode current collector and a first negative active material layer having a thickness less than or equal to the thickness of the liquid junction prevention member is disposed on the negative electrode current collector, a second positive active material layer is further disposed on the first positive active material layer and a second negative active material layer is further disposed on the first negative active material layer.

9. The bipolar storage battery according to claim 1, wherein the liquid junction prevention member is formed integrally with the conductor as a liquid junction prevention unit.

10. The bipolar storage battery according to claim 9, wherein a width of the liquid junction prevention unit is larger than an opening width of the through hole, and in a case where the conductor is inserted into the through hole, the liquid junction prevention unit is in contact with the positive electrode current collector and the negative electrode current collector.

11. The bipolar storage battery according to claim 10, wherein an insulating layer is provided in the liquid junction prevention member or the liquid junction prevention unit of the conductor in a region facing the electrolyte layer.

12. The bipolar storage battery according to claim 1, wherein the liquid junction prevention member is continuously disposed in a vicinity of the opening of each of the through holes and in a vicinity of the opening of each of the through holes provided adjacent to each other, and both end portions of the liquid junction prevention member extend to an outer edge portion of the positive electrode current collector or the negative electrode current collector.

13. The bipolar storage battery according to claim 12, wherein the liquid junction prevention member is manufactured integrally with the current collector by casting or forging.

14. The bipolar storage battery according to claim 1, wherein the liquid junction prevention member is formed of an adhesive.

15. The bipolar storage battery according to claim 14, wherein the liquid junction prevention member is formed of a cured product of a reaction-curable adhesive that is cured by reaction between a main agent containing an epoxy resin and a curing agent containing an amine compound.

16. The bipolar storage battery according to claim 1, further comprising:
a first liquid junction prevention member formed of an adhesive; and
a second liquid junction prevention member disposed in contact with the first liquid junction prevention member,
wherein the second liquid junction prevention member is formed of resin.

17. The bipolar storage battery according to claim 16, wherein the second liquid junction prevention member is formed of a non-conductive resin.

18. The bipolar storage battery according to claim 16, wherein the second liquid junction prevention member is continuously disposed by connecting the first liquid junction prevention member disposed in a vicinity of the opening of each of the through holes, and both end portions of the second liquid junction prevention member are joined to the frame body disposed at a position facing the both end portions.

19. The bipolar storage battery according to claim 16, wherein a press mechanism configured to penetrate the cell member accommodated between the space forming members adjacent to each other is provided, one end side of the press mechanism is disposed in contact with any one of the second liquid junction prevention member, the positive electrode current collector, or the negative electrode current collector, and another end side of the press mechanism is disposed in contact with any one of the positive electrode current collector, the negative electrode current collector, or the second liquid junction prevention member.

20. The bipolar storage battery according to claim 19, wherein the press mechanism includes a cover member configured to partition the positive active material layer or the negative active material layer and the electrolyte layer in a vicinity of the through hole provided in each part of the cell member to allow penetration through the cell member.

21. The bipolar storage battery according to claim 16,
wherein in a case where the liquid junction prevention member is provided in the vicinity of the opening on the positive electrode side of the through hole,
the second liquid junction prevention member is a cover plate configured to cover a peripheral portion of the positive electrode current collector.

22. The bipolar storage battery according to any one of claims 1 to 21, wherein the positive electrode current collector and the negative electrode current collector are made of lead or a lead alloy.

23. A manufacturing method for a bipolar storage battery, comprising:
inserting a conductor into a through hole provided to penetrate one surface and another surface of a substrate of a space forming member;
disposing a positive electrode current collector on the one surface;
disposing a negative electrode current collector on the other surface;
disposing a liquid junction prevention member to cover at least one of the through holes from above the positive electrode current collector and the negative electrode current collector;
performing welding to sandwich between the disposed liquid junction prevention member on a side of the positive electrode current collector and the disposed liquid junction prevention member on a side of the negative electrode current collector, or in a case where the liquid junction prevention member is disposed on either the side of the positive electrode current collector or the negative electrode current collector, to sandwich between the liquid junction prevention member and the negative electrode current collector or between the liquid junction prevention member and the positive electrode current collector, and joining the liquid junction prevention member, the positive electrode current collector, the negative electrode current collector, and the conductor;
disposing a positive active material layer to be in contact with the positive electrode current collector; and
disposing a negative active material layer to be in contact with the negative electrode current collector.

24. A manufacturing method for a bipolar storage battery, comprising:
inserting a conductor into a through hole provided to penetrate one surface and another surface of a substrate of a space forming member;
disposing a liquid junction prevention member to cover at least one of the through holes from above a positive electrode current collector and a negative electrode current collector;
disposing the positive electrode current collector on the one surface;
disposing the negative electrode current collector on the other surface;
performing welding to sandwich between the disposed liquid junction prevention member on a side of the positive electrode current collector and the disposed liquid junction prevention member on a side of the negative electrode current collector, or in a case where the liquid junction prevention member is disposed on either the side of the positive electrode current collector or the negative electrode current collector, to sandwich between the liquid junction prevention member and the negative electrode current collector or between the liquid junction prevention member and the positive electrode current collector, and joining the liquid junction prevention member, the positive electrode current collector, the negative electrode current collector, and the conductor;
disposing a positive active material layer to be in contact with the positive electrode current collector; and
disposing a negative active material layer to be in contact with the negative electrode current collector.

25. A manufacturing method for a bipolar storage battery, comprising:
disposing a positive electrode current collector on one surface of a substrate of a space forming member;
disposing a negative electrode current collector on another surface of the substrate;
inserting, from a side of the positive electrode current collector, a conductor including a liquid junction prevention unit integrally formed into a through hole provided to penetrate the one surface and the other surface of the substrate;
inserting, from a side of the negative electrode current collector, the conductor including the liquid junction prevention unit into the through hole;
performing welding to sandwich the liquid junction prevention unit on the side of the positive electrode current collector and the liquid junction prevention unit on the side of the negative electrode current collector that are disposed, and joining the positive electrode current collector, the negative electrode current collector, and the conductor including the liquid junction prevention unit;
disposing a positive active material layer to be in contact with the positive electrode current collector; and
disposing a negative active material layer to be in contact with the negative electrode current collector.

26. The manufacturing method for a bipolar storage battery according to any one of claims 23 to 25, wherein thicknesses of the positive active material layer and the negative active material layer are larger than or equal to a thickness being an amount of protrusion from the liquid junction prevention member, or the positive electrode current collector or the negative electrode current collector of the liquid junction prevention unit.

27. The manufacturing method for a bipolar storage battery according to any one of claims 23 to 25, wherein thicknesses of the positive active material layer and the negative active material layer are thinner than a thickness being an amount of protrusion from the liquid junction prevention member, or the positive electrode current collector or the negative electrode current collector of the liquid junction prevention unit.

28. The manufacturing method for a bipolar storage battery according to claim 27, further comprising, after disposing a first positive active material layer and a first negative active material layer having a thickness less than or equal to a thickness being an amount of protrusion from the liquid junction prevention member, or the positive electrode current collector or the negative electrode current collector of the liquid junction prevention unit, disposing a second positive active material layer and a second negative active material layer to cover a protrusion of the liquid junction prevention member or the liquid junction prevention unit.

29. The manufacturing method for a bipolar storage battery according to any one of claims 23 to 25, further comprising,
after disposing the positive active material layer and disposing the negative active material layer,
providing an insulating layer in a region facing an electrolyte layer in the liquid junction prevention member or the liquid junction prevention unit.

30. The manufacturing method for a bipolar storage battery according to any one of claims 23 to 25, wherein the liquid junction prevention member includes a first liquid junction prevention member disposed in a vicinity of an opening of the through hole and a second liquid junction prevention member continuously disposed by connecting each of the first liquid junction prevention members, the manufacturing method further comprising joining both end portions of the second liquid junction prevention member to a frame body disposed at a position facing the both end portions.
